# EUROPEAN PATENT APPLICATION

(11) **EP 4 383 836 A1**
(43) Date of publication of application: **12.06.2024**
(21) Application number: 22863358.2
(22) Date of filing: 29.08.2022
(51) Int. Cl.: H04W 52/02

(54) **COMMUNICATION METHOD AND APPARATUS**

(30) Priority: 31.08.2021 CN 202111013775
(71) Applicant: Huawei Technologies Co., Ltd., Shenzhen, Guangdong 518129 (CN)
(72) Inventor: HUANG, Guogang, Shenzhen, Guangdong 518129 (CN); GAN, Ming, Shenzhen, Guangdong 518129 (CN); LI, Yunbo, Shenzhen, Guangdong 518129 (CN); GUO, Yuchen, Shenzhen, Guangdong 518129 (CN)
(74) Representative: Gill Jennings & Every LLP
(86) International application number: PCT/CN2022/115403
(87) International publication number: WO 2023/030222

(57) **Abstract**

This application provides a communication method and apparatus, to reduce power consumption of a multi-link device. The method includes: A first multi-link device receives a first physical layer protocol data unit PPDU from a second multi-link device by using a first station, where the first PPDU is used to wake up a second station of the first multi-link device, and the second station is in a doze state in a power save mode. The first multi-link device may determine, based on the first PPDU, whether to wake up the second station. This application is applied to a wireless local area network system supporting IEEE 802.11ax next-generation Wi-Fi protocols, for example, 802.11 series protocols such as the 802.11be or the EHT.

## Description

### CROSS-REFERENCE TO RELATED APPLICATIONS

This application claims priority to Chinese Patent Application No. 202111013775.9, filed with the China National Intellectual Property Administration on August 31, 2021 and entitled "COMMUNICATION METHOD AND APPARATUS ", which is incorporated herein by reference in its entirety.

### TECHNICAL FIELD

This application relates to the field of wireless communication technologies, and in particular, to a communication method and apparatus.

### BACKGROUND

It is specified in the institute of electrical and electronics engineers (institute of electrical and electronics engineers, IEEE) 802.11be draft (draft) that a multicast data frame needs to be replicated and sent over all links of an access point (access point, AP) multi-link device (multi-link device, MLD), but a multicast management frame is sent independently over a corresponding link of the AP MLD.

However, in this manner of sending the multicast data frame and the multicast management frame, all the links of the AP MLD need to wake up periodically to receive a multicast data frame and a multicast management frame that are buffered on an AP side. This is unfavorable to power saving of the AP MLD.

### SUMMARY

This application provides a communication method and apparatus, to reduce power consumption of a multi-link device.

According to a first aspect, a communication method is provided. The method may be implemented through interaction between a first multi-link device and a second multi-link device.

The first multi-link device receives a first physical layer protocol data unit (physical protocol data unit, PPDU) from the second multi-link device by using a first station, where the first PPDU is used to wake up a second station of the first multi-link device, and the second station is in a doze state in a power save mode. The first multi-link device may determine, based on the first PPDU, whether to wake up the second station.

The first multi-link device includes the first station and the second station, the second multi-link device may include a first station and a second station, and the first multi-link device and the second multi-link device may communicate with each other by using the first stations and the second stations. The second station of the first multi-link device is in the doze state. Therefore, in the method, the second multi-link device may indicate, by using the first station, to wake up the second station, so that the second station is woken up when the second station needs to be woken up, and is in the doze state when the second station does not need to be woken up, to reduce power consumption of the multi-link device, and facilitate power saving of the multi-link device.

The first multi-link device may be an AP MLD or a non-access point multi-link device (non-AP MLD), and the second multi-link device may be an AP MLD or a non-AP MLD. For example, the non-AP MLD may be a station (station, STA) MLD.

A first station and a second station may be APs or STAs. For example, when a multi-link device is an AP MLD, a first station and a second station included in the multi-link device may be APs. When a multi-link device is a non-AP MLD, a first station and a second station included in the multi-link device may be STAs. The multi-link device herein may be the first multi-link device or the second multi-link device. There may be one or more first stations, and there may be one or more second stations.

A power management mode of a station (including the first station and/or the second station) includes an active mode and a power save mode. In the power save mode, a power status of the station may further include an awake state and a doze state. The station does not transmit a message packet in the doze state, and power consumption of the station and a multi-link device to which the station belongs is lower. In the method, the second station is in the doze state, and the first station may be in the active mode or in the awake state in the power save mode.

In a possible design, the first station of the first multi-link device corresponds to the first station of the second multi-link device, and the second station of the first multi-link device corresponds to the second station of the second multi-link device.

The first PPDU may come from the first station of the second multi-link device, and the corresponding first station of the first multi-link device receives the first PPDU.

Optionally, the first station of the first multi-link device may be connected to the first station of the second multi-link device through a first link, and the second station of the first multi-link device may be connected to the second station of the second multi-link device through a second link. In other words, the first station (of the first multi-link device and/or the second multi-link device) is a station corresponding to the first link, and the second station (of the first multi-link device and/or the second multi-link device) is a station corresponding to the second link.

In a possible scenario, the first link is a primary link, the first station corresponding to the first link is a primary station (for example, a primary AP), a second link is a non-primary link, and the second station corresponding to the second link is a non-primary link (for example, a non-primary AP).

In a possible design, the first multi-link device and the second multi-link device may request to wake up the second station in a negotiation manner, for example, define a new wakeup request frame to wake up the second station.

For example, the first PPDU includes a wakeup request frame, and the wakeup request frame is used to wake up the second station. The wakeup request frame includes one or more of the following types of information: an access type corresponding to buffered data, a traffic identifier corresponding to the buffered data, a size of the buffered data, an identifier of the second station, or a minimum remaining delay of latency sensitive traffic. It may be understood that one or more types of information in the wakeup request frame may be carried in one field, or may be carried in a plurality of fields, and a sequence of fields carrying the one or more types of information is not limited.

Correspondingly, a new wakeup response frame may be further defined to notify the second multi-link device whether the second station is woken up, or whether the second station is allowed to be woken up.

For example, when determining, based on the first PPDU, whether to wake up the second station, the first multi-link device may send a fourth PPDU to the second multi-link device, where the fourth PPDU includes a wakeup response frame, and the wakeup response frame notifies whether the second station is allowed to be woken up. Optionally, the wakeup response frame includes an identifier of the second station and indication information indicating whether the second station is allowed to be woken up.

In a possible design, the second multi-link device may notify to wake up the second station in a notification manner.

For example, the first PPDU includes notification information, and the notification information is used to wake up the second station.

In a possible design, the second multi-link device may request, based on a probe request frame, to wake up the second station.

For example, the first PPDU includes a probe request frame, the probe request frame carries a wakeup request element, and the wakeup request element is used to request to wake up the second station.

In the method, the second multi-link device may wake up the second station in a plurality of manners, to improve flexibility of communication.

In a possible design, the first multi-link device may send an eighth PPDU to the second multi-link device, where the eighth PPDU is used to notify a wakeup condition of the second station.

For example, the wakeup condition may be that the size of the buffered data reaches a first data amount, or the minimum remaining delay of the latency sensitive traffic reaches a first delay. The wakeup condition is not limited herein.

In a possible design, the first multi-link device may further send a third PPDU over the first link, where the third PPDU includes a first beacon frame, the first beacon frame indicates a power status, in the power save mode, of the second station of the first multi-link device corresponding to the second link, and the power status includes an awake state or a doze state.

For example, the first beacon frame may include a second field and a third field. The second field indicates that a power management mode of the second station is the power save mode, and the third field indicates the power status of the second station. Optionally, the second field may be a power management (power management) mode field, and the third field may be a power status (power status) field.

In this design, the first multi-link device may adjust a power management mode and a power status of a station included in the first multi-link device.

For example, when the first multi-link device determines, based on the first PPDU, to wake up the second station of the first multi-link device, the power management mode of the first beacon frame in the third PPDU may be the active mode, or the power management mode of the first beacon frame may be the power save mode and the power status is the awake state.

For another example, when a second access point is in the awake state in the power save mode, and idle duration of clear channel assessment (clear channel assessment, CCA) of the second link reaches first duration, the first multi-link device adjusts the power status of the second station to the doze state. The power management mode of the first beacon frame in the third PPDU may be the power save mode, and the power status is the doze state.

In a possible design, the first multi-link device may further notify the second multi-link device whether the first multi-link device is a soft access point multi-link device (soft AP MLD). For a specific implementation process, refer to a third aspect and a fourth aspect. Details are not described herein.

In a possible design, the first multi-link device may further send information about the second station to the second multi-link device. For a specific implementation process, refer to a fifth aspect and a sixth aspect. Details are not described herein.

In a possible design, the first multi-link device may further send a multicast frame of the second link over the first link. For a specific implementation process, refer to a seventh aspect and an eighth aspect. Details are not described herein.

In a possible design, the first multi-link device may further indicate, to the second multi-link device through the first link, that the second station is unavailable. For a specific implementation process, refer to a ninth aspect and a tenth aspect. Details are not described herein.

According to a second aspect, a communication method is provided. The method may be implemented through interaction between a first multi-link device and a second multi-link device.

The second multi-link device determines a first PPDU, where the first PPDU is used to wake up a second station of the first multi-link device, and the second station is in a doze state in a power save mode. The second multi-link device may send the first PPDU to the first multi-link device by using a first station.

In a possible design, a first station of the first multi-link device corresponds to the first station of the second multi-link device, and the second station of the first multi-link device corresponds to a second station of the second multi-link device.

In a possible design, the first PPDU includes a wakeup request frame, the wakeup request frame is used to wake up the second station, and the wakeup request frame includes one or more of the following types of information: an access type corresponding to buffered data, a traffic identifier corresponding to the buffered data, a size of the buffered data, an identifier of the second station, or a minimum remaining delay of latency sensitive traffic;
the first PPDU includes notification information, and the notification information is used to wake up the second station; or
the first PPDU includes a probe request frame, the probe request frame carries a wakeup request element, and the wakeup request element is used to request to wake up the second station.

In a possible design, the second multi-link device may further receive a fourth PPDU from the first multi-link device, where the fourth PPDU includes a wakeup response frame, and the wakeup response frame notifies whether the second station is allowed to be woken up.

Optionally, the wakeup response frame includes an identifier of the second station and indication information indicating whether the second station is allowed to be woken up.

In a possible design, the first station is a station corresponding to a first link, and the second station is a station corresponding to a second link.

According to a third aspect, a communication method is provided. The method may be implemented through interaction between a first multi-link device and a second multi-link device.

The first multi-link device sends a second PPDU, and the second multi-link device receives the second PPDU, where the second PPDU includes a multi-link element (multi-link element).

A second field of the multi-link element indicates whether the first multi-link device is a soft AP MLD.

For example, the second field may be a reserved field, and the reserved field may indicate whether the first multi-link device is a soft AP MLD. The reserved field is an undefined field that may be used for a plurality of future selections, that is, information indicated by the reserved field is undefined. In the method, some or all bits in the reserved field may indicate whether the first multi-link device is the soft AP MLD.

For another example, the second field may be a frequency separation for STR field, and the frequency separation for STR field indicates whether the first multi-link device is a soft AP MLD.

Optionally, the multi-link element may be carried in a beacon frame. The first multi-link device indicates, by using the multi-link element carried in the beacon frame, whether the first multi-link device is the soft AP MLD, without depending on NSTR link pair (NSTR Link Pair) information in a probe response frame. The second multi-link device may know whether the first multi-link device is the soft AP MLD by using the beacon frame.

According to a fourth aspect, a communication method is provided. The method may be implemented through interaction between a first multi-link device and a second multi-link device.

The second multi-link device receives a second PPDU, where the second PPDU includes a multi-link element.

A first field of the multi-link element indicates whether the first multi-link device is a soft AP MLD.

For example, the first field may be a reserved field, or may be a frequency separation for STR field.

According to a fifth aspect, a communication method is provided. The method may be implemented through interaction between a first multi-link device and a second multi-link device.

The first multi-link device broadcasts a sixth PPDU over a second link, where the sixth PPDU includes information about a second station; or
the first multi-link device sends a seventh PPDU over a first link, where the seventh PPDU includes a second beacon frame, the second beacon frame includes a fourth field, and the fourth field carries information about a second station.

For example, the fourth field may be an element field of the second link.

In the method, the first multi-link device may transmit the information about the second station, to improve accuracy of communication.

Optionally, the information about the second station includes one or more of the following: a timestamp, a beacon interval, and a timing synchronization function offset.

According to a sixth aspect, a communication method is provided. The method may be implemented through interaction between a first multi-link device and a second multi-link device.

The second multi-link device receives a sixth PPDU over a second link, where the sixth PPDU includes information about a second station; or
the second multi-link device receives a seventh PPDU over a first link, where the seventh PPDU includes a second beacon frame, the second beacon frame includes a fourth field, and the fourth field carries information about a second station.

For example, the fourth field may be an element field of the second link.

Optionally, the information about the second station includes one or more of the following: a timestamp, a beacon interval, and a timing synchronization function offset.

According to a seventh aspect, a communication method is provided. The method may be implemented through interaction between a first multi-link device and a second multi-link device.

The first multi-link device may further send a fifth PPDU over a first link, where the fifth PPDU includes identifier information of a second link and a multicast frame corresponding to the second link.

The multicast frame may be a multicast data frame or a multicast management frame. The method is mainly described by using the multicast frame as the multicast management frame.

In the method, the first multi-link device assists the second link in sending the multicast frame by using the first link, and a second station corresponding to the second link may always be in a doze mode, and does not need to be adjusted to an active mode, to further reduce power consumption of the first multi-link device.

Optionally, the fifth PPDU includes an address 3 field, and the address 3 field carries identifier information of the second link. Alternatively, the fifth PPDU includes a frame body, and the frame body carries identifier information of the second link.

When the multicast management frame of the second link is sent over the first link, the multicast management frame needs to be encrypted by using a packet number (packet number, PN) allocated by the first link.

According to an eighth aspect, a communication method is provided. The method may be implemented through interaction between a first multi-link device and a second multi-link device.

The second multi-link device receives a fifth PPDU over a first link, where the fifth PPDU includes identifier information of a second link and a multicast frame corresponding to the second link.

Optionally, the fifth PPDU includes an address 3 field, and the address 3 field carries identifier information of the second link. Alternatively, the fifth PPDU includes a frame body, and the frame body carries identifier information of the second link.

According to a ninth aspect, a communication method is provided. The method may be implemented through interaction between a first multi-link device and a second multi-link device.

The first multi-link device sends a ninth PPDU to the second multi-link device over a first link, where the ninth PPDU indicates that a second station is unavailable.

The unavailability may be specifically that probe and association operations are not allowed to be initiated on a channel on which the second station of the first multi-link device works, may be that the second station of the first multi-link device is about to perform channel switching, and frame switching over a second link is prohibited during this period, or may be that the second station of the first multi-link device schedules a quiet period or restricted (restricted) target wakeup time (target wakeup time, TWT), and a legacy STA is prohibited from performing transmission during this period.

According to a tenth aspect, a communication method is provided. The method may be implemented through interaction between a first multi-link device and a second multi-link device.

The second multi-link device receives a ninth PPDU over a first link, where the ninth PPDU indicates that a second station is unavailable.

According to an eleventh aspect, a communication apparatus is provided. The communication apparatus may be the foregoing first multi-link device or second multi-link device, or a chip disposed in the first multi-link device or the second multi-link device. The communication apparatus may implement the method according to any one of the foregoing aspects.

When the communication apparatus is the first multi-link device, optionally, the communication apparatus includes a processing unit and a transceiver unit.

For example, the transceiver unit is configured to receive a first physical layer protocol data unit PPDU from the second multi-link device by using a first station, where the first PPDU is used to wake up a second station of the communication apparatus, the communication apparatus includes the first station and the second station, and the second station is in a doze state in a power save mode.

The processing unit is configured to determine, based on the first PPDU, whether to wake up the second station.

In a possible design, the transceiver unit is further configured to send a second PPDU, where the second PPDU includes a multi-link element.

A reserved field of the multi-link element indicates whether the communication apparatus is a soft access point multi-link device soft AP MLD. Alternatively, a frequency separation for STR field of the multi-link element indicates whether the communication apparatus is a soft AP MLD.

In a possible design, the first PPDU includes a wakeup request frame, the wakeup request frame is used to wake up the second station, and the wakeup request frame includes one or more of the following types of information: an access type corresponding to buffered data, a traffic identifier corresponding to the buffered data, a size of the buffered data, an identifier of the second station, or a minimum remaining delay of latency sensitive traffic;
the first PPDU includes notification information, and the notification information is used to wake up the second station; or
the first PPDU includes a probe request frame, the probe request frame carries a wakeup request element, and the wakeup request element is used to request to wake up the second station.

In a possible design, the first station is a station corresponding to a first link, and the second station is a station corresponding to a second link.

In a possible design, the transceiver unit is further configured to send a third PPDU to the second station over the first link, where the third PPDU includes a first beacon frame, the first beacon frame indicates a power status, in the power save mode, of the second station corresponding to the second link, and the power status includes an awake state or a doze state.

In a possible design, the first beacon frame includes a power management mode field and a power status field, the power management mode field indicates that a power management mode of the second station is the power save mode, and the power status field indicates the power status of the second station.

In a possible design, the processing unit is specifically configured to send a fourth PPDU to the second multi-link device by using the transceiver unit, where the fourth PPDU includes a wakeup response frame, and the wakeup response frame notifies whether the second station is allowed to be woken up.

In a possible design, the wakeup response frame includes an identifier of the second station and indication information indicating whether the second station is allowed to be woken up.

In a possible design, the transceiver unit is further configured to: broadcast a sixth PPDU over the second link, where the sixth PPDU includes information about the second station; or send a seventh PPDU over the first link, where the seventh PPDU includes a second beacon frame, the second beacon frame includes an element field of the second link, and the element field of the second link carries information about the second station.

The information about the second station includes one or more of the following: a timestamp, a beacon interval, and a timing synchronization function offset.

When the communication apparatus is the second multi-link device, optionally, the communication apparatus includes a processing unit and a transceiver unit.

For example, the processing unit is configured to determine a first physical layer protocol data unit PPDU, where the first PPDU is used to wake up a second station of the first multi-link device, and the second station is in a doze state in a power save mode.

The transceiver unit is configured to send the first PPDU to the first multi-link device by using a first station.

In a possible design, the transceiver unit is further configured to receive a second PPDU, where the second PPDU includes a multi-link element.

A reserved field of the multi-link element indicates whether the first multi-link device is a soft access point multi-link device soft AP MLD. Alternatively, a frequency separation for STR field of the multi-link element indicates whether the first multi-link device is a soft AP MLD.

In a possible design, the first PPDU includes a wakeup request frame, the wakeup request frame is used to wake up the second station, and the wakeup request frame includes one or more of the following types of information: an access type corresponding to buffered data, a traffic identifier corresponding to the buffered data, a size of the buffered data, an identifier of the second station, or a minimum remaining delay of latency sensitive traffic;
the first PPDU includes notification information, and the notification information is used to wake up the second station; or
the first PPDU includes a probe request frame, the probe request frame carries a wakeup request element, and the wakeup request element is used to request to wake up the second station.

In a possible design, the transceiver unit is further configured to receive a fourth PPDU from the first multi-link device, where the fourth PPDU includes a wakeup response frame, and the wakeup response frame notifies whether the second station is allowed to be woken up.

In a possible design, the wakeup response frame includes an identifier of the second station and indication information indicating whether the second station is allowed to be woken up.

In a possible design, the first station is a station corresponding to a first link, and the second station is a station corresponding to a second link.

In a possible design, the transceiver unit is further configured to: receive a sixth PPDU over the second link, where the sixth PPDU includes information about the second station; or receive a seventh PPDU over the first link, where the seventh PPDU includes a second beacon frame, the second beacon frame includes an element field of the second link, and the element field of the second link carries information about the second station.

The information about the second station includes one or more of the following: a timestamp, a beacon interval, and a timing synchronization function offset.

According to a twelfth aspect, a communication apparatus is provided, including a processor, configured to perform the method according to any one of the foregoing aspects.

Optionally, the apparatus further includes a memory. The memory stores instructions, and the processor executes the instructions in the memory to perform the method according to any one of the foregoing aspects.

Optionally, the memory is located inside or outside the apparatus.

Optionally, the apparatus further includes an interface circuit. The processor is coupled to the interface circuit.

Optionally, there are one or more processors, and there are one or more memories.

Optionally, the memory may be integrated with the processor, or the memory and the processor are disposed separately.

In a specific implementation process, the memory may be a non-transitory (non-transitory) memory, such as a read-only memory (read-only memory, ROM). The memory and the processor may be integrated into one chip, or may be separately disposed in different chips. A type of the memory and a manner in which the memory and the processor are disposed are not limited in embodiments of this application.

The communication apparatus may be a chip, and the processor may be implemented by hardware or software. When being implemented by hardware, the processor may be a logic circuit, an integrated circuit, or the like. When being implemented by software, the processor may be a general-purpose processor, and is implemented by reading software code stored in the memory. The memory may be integrated into the processor, may be located outside the processor, and exists independently.

According to a thirteenth aspect, a processor is provided, including an input circuit, an output circuit, and a processing circuit. The processing circuit is configured to: receive a signal by using the input circuit, and transmit a signal by using the output circuit, so that the processor performs the method according to any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be, for example, but not limited to, output to a transmitter and transmitted by the transmitter, and the input circuit and the output circuit may be a same circuit. The circuit is used as the input circuit and the output circuit at different moments. Specific implementations of the processor and the various circuits are not limited in embodiments of this application.

According to a fourteenth aspect, a computer program product is provided. The computer program product includes a computer program (which may also be referred to as code or instructions), and when the computer program is run, a computer is enabled to perform the method according to any one of the foregoing aspects.

According to a fifteenth aspect, a computer-readable medium is provided. The computer-readable medium stores a computer program (which may also be referred to as code or instructions), and when the computer program is run on a computer, the computer is enabled to perform the method according to any one of the foregoing aspects.

According to a sixteenth aspect, a chip system is provided. The chip system includes a processor and an interface, configured to support a communication apparatus in implementing a function in any one of the foregoing aspects. In a possible design, the chip system further includes a memory, and the memory is configured to store necessary information and data of the foregoing communication apparatus. The chip system may include a chip, or may include a chip and another discrete device.

According to a seventeenth aspect, a functional entity is provided. The functional entity is configured to implement the method according to any one of the foregoing aspects.

According to an eighteenth aspect, a communication system is provided, including the first multi-link device and the second link device according to any one of the foregoing aspects.

For technical effects brought by any one of design manners in the second aspect to the eighteenth aspect, refer to the technical effects brought by the first aspect. Details are not described herein again.

It should be noted that the communication methods provided in the first aspect to the tenth aspect may be used alone, or may be used together. This is not limited herein.

### BRIEF DESCRIPTION OF DRAWINGS

FIG. 1 is a schematic diagram of a multi-link device;
FIG. 2 is a schematic diagram of a frame structure of a reduced neighbor report element (Reduced Neighbor Report Element);
FIG. 3 is a schematic diagram of a frame structure of a target beacon transmission time (Target beacon transmission Time, TBTT) information field;
FIG. 4 is a schematic diagram of a frame structure of a basic service set parameter (BSS Parameter) field;
FIG. 5 is a schematic diagram of a structure of a communication system;
FIG. 6 is a schematic diagram of a frame structure of a multi-link element (Multi-link Element);
FIG. 7 is a schematic diagram of a frame structure of a control frame;
FIG. 8 is a schematic diagram of a frame structure of a frame control (Frame Control) field;
FIG. 9 is a schematic diagram of a frame format of a quiet element (Quiet Element);
FIG. 10 is a schematic diagram of a structure of a communication system;
FIG. 11 is a schematic diagram of a communication process according to an embodiment of this application;
FIG. 12 is a schematic diagram of a frame structure of a wakeup request frame according to an embodiment of this application;
FIG. 13 is a schematic diagram of a frame structure of a wakeup response frame according to an embodiment of this application;
FIG. 14 is a schematic diagram of adjusting a power status of a station according to an embodiment of this application;
FIG. 15 is a schematic diagram of adjusting a power status of a station according to an embodiment of this application;
FIG. 16 is a schematic diagram of a frame structure of a multi-link element according to an embodiment of this application;
FIG. 17 is a schematic diagram of a structure of a communication apparatus according to an embodiment of this application;
FIG. 18 is a schematic diagram of a structure of a communication apparatus according to an embodiment of this application; and
FIG. 19 is a schematic diagram of a structure of a communication apparatus according to an embodiment of this application.

### DESCRIPTION OF EMBODIMENTS

The following describes technical solutions of this application with reference to accompanying drawings.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between associated objects. In this application, at least one means one or more, and a plurality of means two or more. In addition, it should be understood that in description of this application, terms such as "first" and "second" are merely used for distinguishing and description, but should not be understood as indicating or implying relative importance, or should not be understood as indicating or implying a sequence.

In addition, in this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

The technical solutions in embodiments of this application may be applied to various communication systems, for example, a wireless local area network (wireless local area network, WLAN) communication system, a long term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, and a future 6th generation (6th generation, 6G) system.

For example, the following describes an application scenario in embodiments of this application and a method in embodiments of this application by using a WLAN system as an example.

Specifically, embodiments of this application may be applied to a WLAN system, and embodiments of this application may be applied to any protocol in IEEE 802.11 series protocols used by the WLAN such as 802.11a/b/g, 802.11n, 802.11ac, 802.11ax, 802.11be, 802.11bf, and a future 802.11 protocol. The method provided in this application may be implemented by a communication device in a wireless communication system, or a chip or a processor in a communication device. Correspondingly, the communication device supports communication by using the IEEE 802.11 series protocols.

Although embodiments of this application are mainly described by using a network in which IEEE 802.11 is deployed as an example, a person skilled in the art easily understands that various aspects of this application may be extended to another network using various standards or protocols, for example, Bluetooth (Bluetooth) and a high performance radio LAN (high performance radio LAN, HIPERLAN) (a wireless standard similar to the IEEE 802.11 standard and mainly used in Europe), a wide area network (WAN), a wireless local area network (WLAN), a personal area network (personal area network, PAN), or other networks currently known or later developed. Therefore, the various aspects provided in this application are applicable to any appropriate wireless network regardless of coverage and wireless access protocols.

In addition, the communication system in this application is merely an example for description, and a communication system applicable to this application is not limited thereto. This is stated herein once for all, and is not repeated below.

The following explains and describes some terms in embodiments of this application, to facilitate understanding of a person skilled in the art.
(1) A multi-link device (multi-link device, MLD) has a plurality of radio frequency modules that respectively work on different frequency bands, channels, or links (links).

The MLD may be an AP MLD or a non-AP MLD. For example, the non-AP MLD may be a station (station, STA) MLD.

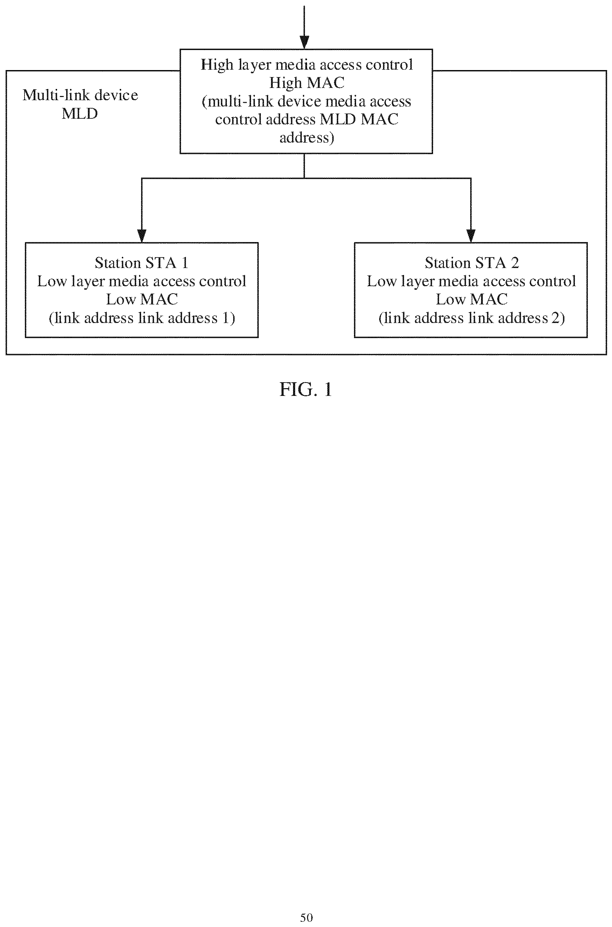

The MLD includes one or more affiliated (affiliated) stations, where the station may be an AP or a STA. Each affiliated station has a respective media access control (media access control, MAC) address (address). As shown in FIG. 1, a STA 1 has a respective low layer (low) MAC address, namely, a link address 1, and a STA 2 has a respective low MAC address, namely, a link address 2. The MLD also has a high layer (high) MAC address, namely, an MLD MAC address.

(2) A soft access point multi-link device (soft access point MLD, soft AP MLD) may implement a function of an AP MLD on a non-AP MLD by using software.

When a distance between channels on which two radio frequency modules in an MLD work is large enough, links corresponding to the two radio frequency modules can run independently without interfering with each other. If the two links in the MLD support simultaneous data transmission over one link and data reception over the other link, the two links support simultaneous transmit and receive (simultaneous transmit and receive, STR). Otherwise, the two links support non-STR (non-STR, NSTR). It is specified in the protocol 802.11be that the soft access point multi-link device (soft access point MLD, soft AP MLD) does not support STR, and other types of AP MLDs support STR.

In one scenario, a mobile phone may be set as a soft AP MLD, to allow other devices to associate with the mobile phone. For an NSTR link pair in the soft AP MLD, one link may be defined as a primary link (Primary Link), and the other link may be defined as a non-primary link (Non-primary Link). An AP corresponding to the primary link is referred to as a primary AP (Primary AP), and an AP corresponding to the non-primary link is referred to as a non-primary AP (Non-primary AP). The non-primary AP is not allowed to send a beacon (Beacon) frame or reply with a probe response (Probe Response) frame. This prevents a legacy STA (Legacy STA) from being associated with the non-primary AP.

The non-AP MLD may assist in implementing an operation on the non-primary link by carrying related information of the non-primary link on the primary link.

(3) In an AP discovery process, a STA may discover existence of an AP in a scanning form of active scanning or passive scanning, to associate and establish a connection with the AP. It is simply understood that a purpose of associating and establishing the connection with the AP by the STA is to establish one or more links used for communication between the STA and the AP.

During passive scanning, the STA may receive a management frame (such as a Beacon frame or a broadcast Probe Response frame) sent by an AP on a channel. For example, the STA may switch between different channels to search for a beacon frame sent by the AP. Once the STA obtains management information of the AP based on the beacon frame, the STA may further communicate with the AP by using a probe request (Probe Request) frame or a probe response frame, to obtain other information from the AP.

During active scanning, the STA may broadcast a probe request frame when no beacon frame is detected through listening. After an AP receives the probe request frame, if a condition is met (this condition is not limited in embodiments of this application), the AP can initiate random channel access to reply with the probe response frame.

To assist the STA in performing fast scanning, an AP may add a reduced neighbor report element (Reduced Neighbor Report Element) to the beacon frame or the probe response frame to report related information of the corresponding AP. In this way, the STA may obtain information about neighbor APs during scanning and select an appropriate AP for association. This prevents the STA from constantly scanning channels, thereby reducing scanning time of the STA. It is specified in the 802.11be that an affiliated AP needs to use a reduced neighbor report element to carry related information of another affiliated AP that is affiliated with a same AP MLD as the affiliated AP. For the STA, a neighbor AP is a neighbor AP of the STA, and for the AP, a neighbor AP is a neighbor AP of the AP.

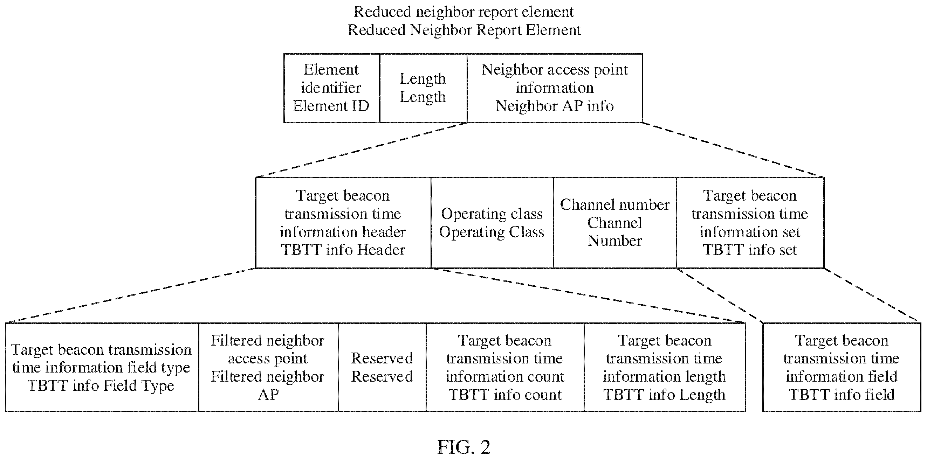

(4) A format of a reduced neighbor report element may be shown in FIG. 2. The reduced neighbor report element includes an element identifier (Element ID) field, a length (Length) field, and one or more neighbor AP information (Neighbor AP info) fields. The neighbor AP info field includes a target beacon transmission time (Target beacon transmission time, TBTT) information header (TBTT info Header) field, an operating class (Operating Class) field, a channel number (Channel Number) field, and one or more TBTT information set (TBTT info set) fields. The TBTT info header field includes a TBTT information field type (TBTT info Field Type) field, a filtered neighbor AP (Filtered neighbor AP) field, a reserved (Reserved) field, a TBTT information count (TBTT info count) field, and a TBTT information length (TBTT info Length) field. The TBTT info set field includes one or more TBTT information fields (TBTT info fields).

The operating class field indicates an operating class to which a working channel of a reported AP belongs. 0 is a reserved value of the operating class field.

The channel number field indicates a channel number corresponding to a working channel of a reported AP. 0 is a reserved value of the channel number. A STA side may determine a specific location of a channel of an AP on a frequency band by using the operating class field and the channel number field.

The TBTT info field type field indicates a type of TBTT info. This field, together with the TBTT info length field, indicates a format of the TBTT info field. Values 1, 2, and 3 are reserved values of the TBTT info field type field.

The filtered neighbor AP field indicates whether service set identifiers (service set identifiers, SSIDs) of all basic service sets (basic service sets, BSSs) carried in the neighbor AP info field match SSIDs in a probe request frame.

The reserved field occupies 1 bit (bit).

The TBTT info count field indicates a quantity of the TBTT info fields included in the TBTT info set field.

The TBTT info length field indicates a length of each TBTT info field. Formats of information carried in the TBTT info field in different lengths may be shown in Table 1 below.

**Table 1**

| TBTT information length (octet) | Content carried in a TBTT information field |
|---|---|
| 1 | TBTT offset (offset) field of a neighbor AP |
| 2 | TBTT offset field and BSS parameter field of a neighbor AP |
| 4 | TBTT offset field and MLD parameter field of a neighbor AP |
| 5 | TBTT offset field and short (short) SSID field of a neighbor AP |
| 6 | TBTT offset field, short SSID field, and BSS parameter field of a neighbor AP |
| 7 | TBTT offset field and BSSID field of a neighbor AP |
| 8 | TBTT offset field, BSSID field, and BSS parameter field of a neighbor AP |
| 9 | TBTT offset field, BSSID field, BSS parameter field, and 20 megahertz |
| | (MHz) power spectral density (power spectral density, PSD) field of a neighbor AP |
| 10 | TBTT offset field, BSSID field, and MLD parameter field of a neighbor AP |
| 11 | TBTT offset field, BSSID field, and short SSID field of a neighbor AP |
| 12 | TBTT offset field, BSSID field, short SSID field, and BSS parameter field of a neighbor AP |
| 0,3,14,15 | Reserved |
| 13 | TBTT offset field, BSSID field, short SSID field, BSS parameter field, and 20 MHz PSD field of a neighbor AP |
| 16 | TBTT offset field, BSSID field, short SSID field, BSS parameter field, 20 MHz PSD field, and MLD parameter field of a neighbor AP |
| 17 to 255 | Reserved, but information about first 16 octets is the same as the fields carried when the TBTT information length is 16 |

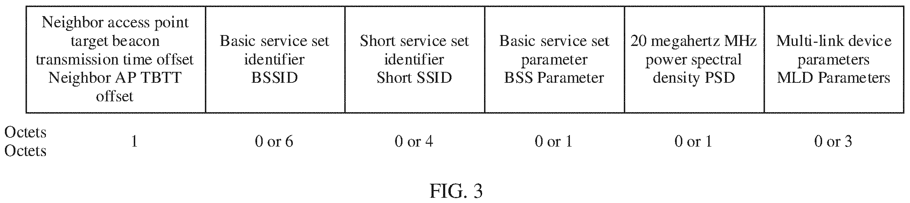

A possible format of the TBTT info field is shown in FIG. 3, and includes a neighbor access point target beacon transmission time offset (Neighbor AP TBTT offset) field, a basic service set identifier (BSS identifier, BSSID) field, a short SSID field, a BSS parameter (Parameter) field, a 20 MHz PSD field, and an MLD parameters field.

The neighbor AP TBTT offset field occupies 1 octet (octet), and indicates an offset between beacon frame sending time for the reported BSS and beacon frame sending time for a BSS for sending the report (Report), where the offset is measured in time units (time units, TUs), and one TU equals to 1024 microseconds or 1 millisecond. If the field is 254, it indicates that the offset is 254 Tus or higher, and if the field is 255, it indicates that a specific offset is unknown.

The BSSID field is an optional field, occupies 0 or 6 octets, and indicates a BSSID corresponding to the reported BSS.

The short SSID field is an optional field, occupies 0 or 4 octets, and indicates an SSID to which the BSS belongs.

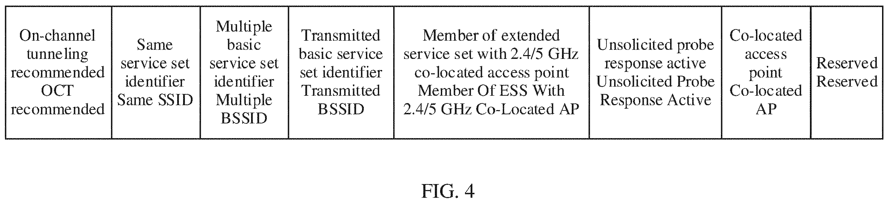

The BSS parameter field is an optional field, occupies 0 octets or 1 octet, and indicates a related parameter of the BSS. As shown in FIG. 4, the BSS Parameter field may include on-channel tunneling (On-channel Tunneling, OCT) recommended (recommended) field, a same (Same) SSID field, a multiple (Multiple) BSSID field, a transmitted (Transmitted) BSSID field, a member of extended service set with 2.4/5 GHz co-located AP (Member Of ESS With 2.4/5 GHz Co-Located AP) field, an unsolicited probe response active (Unsolicited Probe Response Active) field, a co-located AP (Co-located AP) field, and a reserved field. The OCT recommended field is located at a bit 0, and indicates that the reported BSS expects to exchange a media protocol data unit (media protocol data unit, MPDU) of a management type with the reported AP through an OCT mechanism. The same SSID field is located at a bit 1, and indicates whether the reported AP and an AP for transmission of the element have the same SSID. The multiple BSSID field is located at a bit 2, and indicates whether the reported AP belongs to a part of a multiple BSSID set. The transmitted BSSID field is located at a bit 3. If the reported AP belongs to a part of a multiple BSSID set, it further indicates whether the reported AP is a transmitted BSSID or a non-transmitted (non-transmitted) BSSID. The member of ESS with 2.4/5 GHz co-located AP field is located at a bit 4, and indicates whether the reported AP is co-located with a 2.4/5 GHz AP (that is, whether it is a 6 GHz only AP) and is a member of an extended service set. The unsolicited probe response active field is located at a bit 5, and indicates whether the reported AP enables unsolicited probe response. The co-located AP field is located at a bit 6, and indicates whether the reported AP and the AP for transmission of the report are co-located. The reserved field is located at a bit 7.

The 20 MHz PSD field is an optional field, occupies 0 octets or 1 octet, and indicates a maximum transmit power spectral density.

The MLD parameters field occupies 0 or 3 octets, and indicates a related parameter of an MLD. The field may include the following sub-fields: a multi-link device identifier (MLD ID) field, a link identifier (Link ID) field, a BSS parameters change count (BSS Parameters Change Count) field, and a reserved field. The MLD ID field occupies 8 bits, and indicates an identifier of an AP MLD. The link ID field occupies 4 bits, and indicates a link identifier corresponding to the reported AP. The BSS parameters change count field occupies 8 bits. When a key change occurs in the reported AP, a value of this field increases. When a key change fails to occur in the reported AP, a value of this field remains unchanged. The reserved field occupies 4 bits.

(5) 802.11be multi-link aggregation technology: An MLD can implement the multi-link aggregation technology. An AP MLD and a STA MLD may establish a plurality of links to aggregate a larger bandwidth, share MAC layers on the plurality of links, and flexibly transmit message packets, to send message packets of traffic to a station at the same time.

A non-AP MLD may perform multi-link establishment over one link to simultaneously associate with the plurality of links of the AP MLD. A link that exchanges a multi-link association request/response (Multi-link Association Request/Response) frame is referred to as a transmitted link (Transmitted Link), and another link is referred to as a non-transmitted link (Non-transmitted link). The multi-link association request/response frame may carry information about a plurality of links, so that the plurality of links can be associated at the same time.

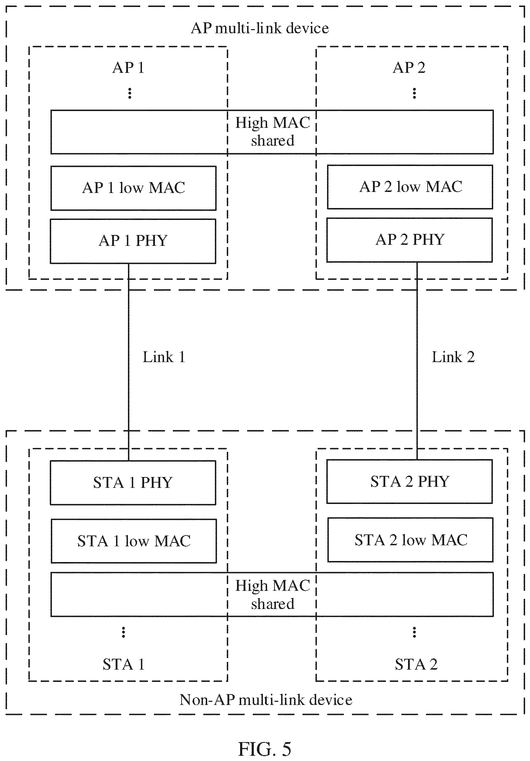

As shown in FIG. 5, a non-AP MLD sends an association request association request frame over a link 1. The association request frame carries STA side information of the link 1, and further carries STA side information of a link 2. The link 1 is a transmitted link, and the link 2 is a non-transmitted link. An AP MLD reply with the association response frame over the link 1. The association response frame carries AP side information of the link 1, and further carries AP side information of the link 2.

A STA 1 and a STA 2 in the non-AP MLD are respectively associated with an AP 1 and an AP 2 in the AP MLD. The association request frame may carry a multi-link element (Multi-link Element), and the multi-link element is used to carry information about the MLD and information about the stations in the MLD.

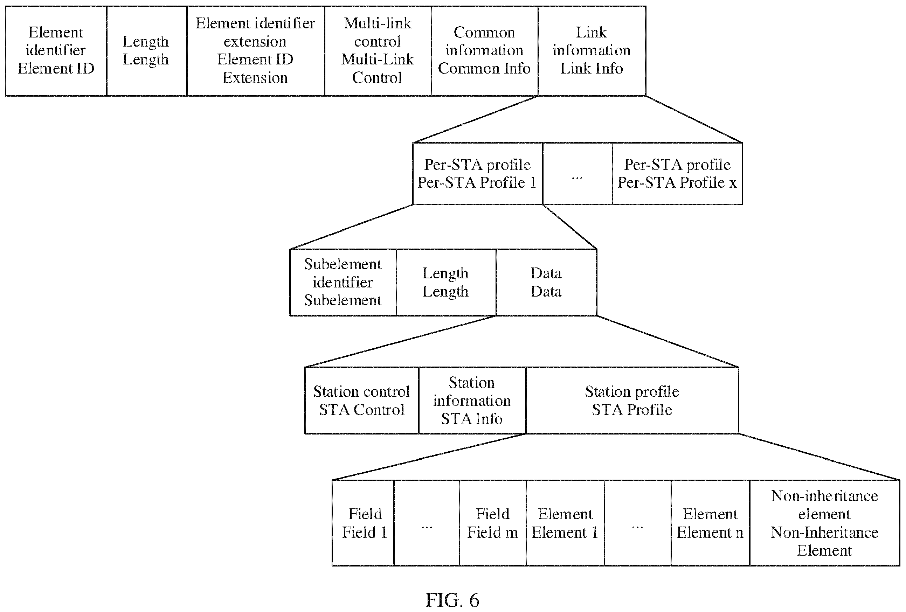

As shown in FIG. 6, a possible multi-link element includes an element identifier (Element ID) field, a length field, an element identifier extension (Element ID Extension) field, a multi-link control (Multi-Link Control) field, a common information (Common Info) field, and a link information (Link Info) field. The common info field carries common information of a plurality of stations in an MLD and information about the MLD. The link info field carries information about stations on each link in the MLD, and includes one or more per-STA profile (Per-STA Profile) fields. The per-STA profile field includes a subelement ID (Subelement ID) field, a length field, and a data (Data) field. The data field includes a station control (STA Control) field, a station information (STA Info) field, and a station profile (STA Profile) field. The STA profile field includes one or more fields (fields), one or more elements (Elements), and a non-inheritance element (Non-Inheritance Element) field. The multi-link control field carries types of a multi-link element (such as two variants: a basic variant (Basic variant) defined in the current protocol and a probe request variant (Probe Request variant) or other types), and a presence bitmap (Presence Bitmap) field indicating a field that does not present.

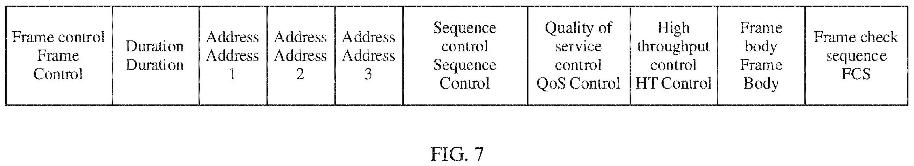

(6) A possible frame format is shown in FIG. 7, including a frame control (Frame Control) field, a duration (Duration) field, an address (Address) 1 field, an address 2 field, an address 3 field, a sequence control (Sequence Control) field, a quality of service control (quality of service Control, QoS Control) field, a high throughput (high throughput, HT) control field, a frame body (Frame Body) field, and a frame check sequence (frame check sequence, FCS) field.

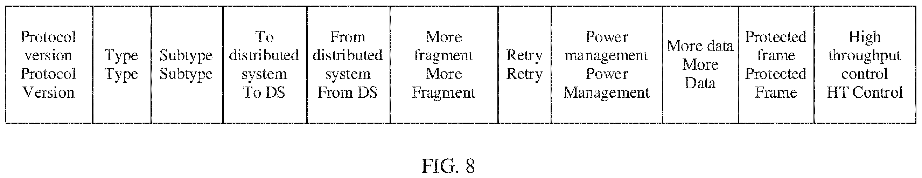

A frame format of the frame control field is shown in FIG. 8, including a protocol version (Protocol Version) field, a type (Type) field, a subtype (Subtype) field, a to distributed system (To distribution system, To DS) field, a from DS (From DS) field, a more fragment (More Fragment) field, a retry (Retry) field, a power management (Power Management) field, a more data (More Data) field, and a protected frame (Protected Frame) field, an HT control field.

The address 1 field is used for a receiver address (receiver address, RA), the address 2 indicates a transmitter address (transmitter address, TA), and the address 3 indicates an address of an AP MLD managed by a receiving end or an address of an AP (an AP in an AP MLD) associated with a receiving end. For management frames, the address 3 can be used for frame filtering. For example, a receiving end may determine, based on the address 3, whether a frame belongs to a BSS, and discard the frame if the frame does not belong to the BSS.

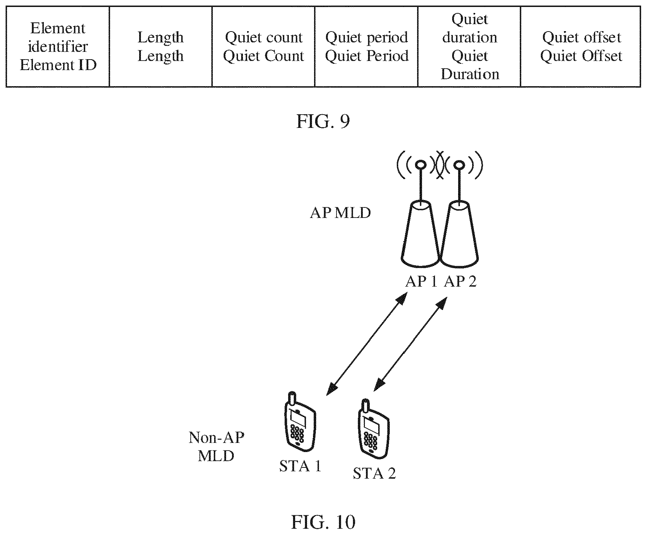

(7) A possible frame format of a quiet element (Quiet Element) is shown in FIG. 9, including an element ID field, a length field, a quiet count (Quiet Count) field, a quiet period (Quiet Period) field, a quiet duration (Quiet Duration) field, and a quiet offset (Quiet Offset) field. The quiet count field indicates a quantity of TBTTs to a next quiet period interval. The quiet period field indicates a quantity of TBTTs between two adjacent quiet period intervals. The quiet duration field indicates duration of a quiet period. The quiet offset field indicates an offset of a quiet period to a closest beacon frame.

For ease of understanding embodiments of this application, a communication system shown in FIG. 10 is first used as an example to describe in detail a communication system applicable to embodiments of this application. The communication system includes one or more AP MLDs and one or more non-AP MLDs. The AP MLD includes an AP 1 and an AP 2, and the non-AP MLD includes a STA 1 and a STA 2. Optionally, the communication system may further include one or more legacy STAs. In the communication system, a frequency band on which the MLD works may be all or a part of sub 1 gigahertz (GHz), 2.4 GHz, 5 GHz, 6 GHz, and a high frequency 60 GHz. This is not limited herein.

It is considered that a soft AP MLD is usually powered by a battery, so that power save is important. In addition, for a regular AP MLD, people pay more and more attention to impact of electromagnetic radiation on a human body, how to reduce the electromagnetic radiation has become one of focuses of people's attention.

Based on this, embodiments of this application provide a communication method. The following describes in detail the communication method provided in embodiments of this application by using an example in which a first multi-link device interacts with a second multi-link device. In embodiments of this application, the first multi-link device includes a first station and a second station, the second multi-link device includes a first station and a second station, and the first multi-link device and the second multi-link device may communicate with each other by using the first stations and the second stations. The second station is in a doze state in a power save mode, and the second multi-link device may indicate, by using the first station, the second station of the first multi-link device to wake up. In this way, the second station can be woken up when the second station needs to be woken up, and is in the doze state when the second station does not need to be woken up. This reduces power consumption of the multi-link device and is more favorable to power saving of the multi-link device. In addition, fewer stations in an awake state in the multi-link device indicate less electromagnetic radiation to a human body. Therefore, this further reduces the electromagnetic radiation to some extent.

It may be understood that, in embodiments of this application, the first multi-link device and/or the second multi-link device may perform some or all of steps in embodiments of this application. These steps or operations are merely examples. In embodiments of this application, other operations or variations of various operations may alternatively be performed. In addition, the steps may be performed in a sequence different from a sequence presented in embodiments of this application, and not all the operations in embodiments of this application may be performed.

It should be noted that, in the following embodiments of this application, names of messages or names of parameters in messages between devices are merely examples, and the messages or the parameters may have other names in specific implementations. This is not specifically limited in embodiments of this application. A sequence, a name, carried information, or a meaning of each field in a frame structure are merely examples. This is not specifically limited in embodiments of this application.

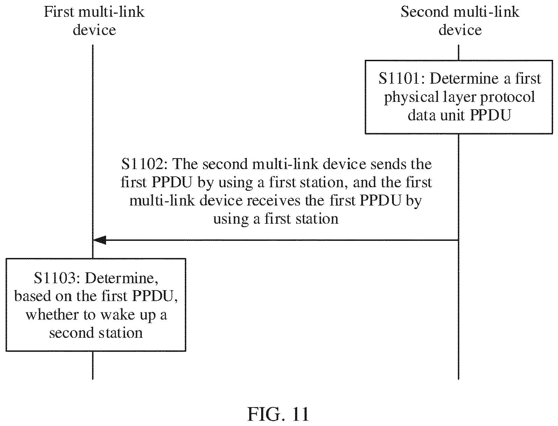

FIG. 11 shows a possible communication method according to an embodiment of this application. The method includes the following steps.

S1101: A second multi-link device determines a first physical layer protocol data unit (physical layer protocol data unit, PPDU).

The first PPDU is used to wake up a second station of a first multi-link device.

The first multi-link device includes a first station and the second station, and the corresponding second multi-link device may also include a first station and a second station. The first multi-link device and the second multi-link device communicate with each other by using the first stations and the second stations. In other words, the first station of the first multi-link device corresponds to the first station of the second multi-link device, and the second station of the first multi-link device corresponds to the second station of the second multi-link device. Power management (Power Management, PM) modes of the first station and the second station may include an active (Active) mode or a power save (Power Save) mode. The power save mode further include two power states: an awake (Awake) state and a doze (Doze) state.

There may be one or more first stations, and there may be one or more second stations. The first station corresponds to a first link, and the second station corresponds to a second link. The first multi-link device may be an AP MLD or a non-AP MLD, and the second multi-link device may be an AP MLD or a non-AP MLD. In this embodiment of this application, an example in which the first multi-link device is the AP MLD, the second multi-link device is the non-AP MLD, the first station of the first multi-link device is a primary AP (AP 1), the second station of the first multi-link device is a non-primary AP (AP 2), the first station of the second multi-link device is a STA 1, the second station of the second multi-link device is a STA 2, the first link is a primary link, and the second link is a non-primary link is mainly used for description.

In this embodiment, the second station of the first multi-link device is in a doze state in a power save mode. The first PPDU may be used to wake up the second station of the first multi-link device in one or more of the following manners.

Manner 1: The first multi-link device and the second multi-link device may wake up the second station of the first multi-link device in a negotiation manner. The first multi-link device sends a wakeup request (Wakeup Request) frame to the second multi-link device. Correspondingly, the second multi-link device replies to the first multi-link device with a wakeup response (Wakeup Response) frame. The wakeup request/response frame is described below.

The first PPDU includes the wakeup request frame, and the wakeup request frame is used to wake up the second station of the first multi-link device.

The wakeup request frame includes one or more of the following types of information: an access type corresponding to buffered data, a traffic identifier corresponding to the buffered data, a size of the buffered data, a link identifier corresponding to the second station, a minimum remaining delay of latency sensitive traffic, and the like. It may be understood that the foregoing one or more types of information may be carried in one field or in a plurality of fields, and a sequence of fields that carry the foregoing one or more types of information is not limited herein. The second station corresponds to the second link, and an identifier of the second station may also be represented by using an identifier of the second link. Optionally, the wakeup request frame may be of a newly defined frame structure.

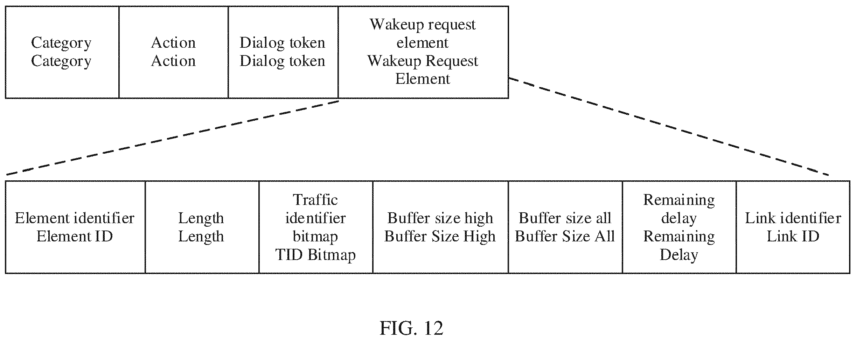

A possible frame structure of the wakeup request frame is shown in FIG. 12, including a category (Category) field, an action (Action) field, a dialog token (Dialog Token) field, and a wakeup request element (Wakeup Request Element) field. The wakeup request element field includes the foregoing one or more types of information, for example, includes an element ID field, a length field, a traffic identifier (Traffic Identifier, TID) bitmap field, a buffer size high (Buffer Size High) field, a buffer size all (Buffer Size All) field, a remaining delay (Remaining Delay) field, and a link ID field.

The TID bitmap field indicates a TID that has data to be sent. For example, 1 indicates that a corresponding TID has data to be sent, and 0 indicates that no data needs to be sent.

The size of the buffered data is indicated by the buffer size high field and the buffer size all field. The buffer size high field indicates a buffer size of a TID with a highest priority, and the buffer size all field indicates a total buffer size of all TIDs. The minimum remaining delay of the latency sensitive traffic is indicated by the remaining delay field. If the minimum remaining delay is exceeded, a transmitting end needs to discard the buffered data. The identifier of the second station is indicated by a link ID, and indicates a target link or a target station that is requested to be woken up.

If the first multi-link device includes more than two links and stations, the wakeup request frame may be used to wake up a plurality of second stations or a plurality of links. The wakeup request frame may carry link IDs of the plurality of links.

Manner 2: The first multi-link device may notify, in a notification manner, the second multi-link device to wake up the second station of the first multi-link device.

The first PPDU includes the notification information, and the notification information is used to wake up the second station of the first multi-link device. For example, the notification information may be carried through A-control. For example, a 16-bit link bitmap indicates a peer end station of a corresponding link to be woken up. If the first multi-link device is the non-AP MLD, and the second multi-link device is the AP MLD, the second station (in the doze state in the power save mode) of the first multi-link device wakes up after receiving a wakeup request, and sends a PS-Poll frame to notify the second station of the second multi-link device. When the second station of the second multi-link device sets the more data field to 0, the second station (in the power save mode) of the first multi-link device switches from the awake state to the doze state.

Manner 3: The first multi-link device may request to wake up the second station of the first multi-link device by using a probe request (Probe Request) frame.

The first PPDU includes the probe request frame, the probe request frame carries a wakeup request element, and the wakeup request element is used to request to wake up the second station of the first multi-link device. For the wakeup request element, refer to the manner 1. Similarities are not limited.

Optionally, in the manners 2 and 3, the second multi-link device may reply to the first multi-link device with information about whether the second station is woken up or whether the second station is allowed to be woken up.

Optionally, the second multi-link device may store a wakeup condition of the second station of the first multi-link device. For example, the first multi-link device broadcasts/sends an eighth PPDU to the second multi-link device, where the eighth PPDU is used to notify the wakeup condition of the second station of the first multi-link device. For example, the eighth PPDU may include a traffic identifier to link announcement (TID-to-link Announcement) frame. The TID-to-link announcement frame is used to notify the wakeup condition of the second station of the first multi-link device, that is, a case in which the second multi-link device can wake up the second station of the first multi-link device. The TID-to-link announcement frame may include the identifier of the second station, a TID bitmap that is allowed to be transmitted over the second link, or minimum remaining delay information of the latency sensitive traffic.

In the following possible cases, the second multi-link device may learn that the second station is in the doze state in the power save mode. For the second station in the doze state, the second multi-link device triggers wakeup of the second station when the wakeup condition is met.

In one case, the second multi-link device may determine, based on the identifier of the second station included in the TID-to-link announcement frame, that the second station corresponding to the identifier is in the doze state in the power save mode.

In another case, before being adjusted to the doze state, the second station of the first multi-link device may notify the second multi-link device that the second station is about to be in the doze state. For example, the second station may perform notification by using the power management field in the frame structure shown in FIG. 8.

Optionally, the second multi-link device may further send second indication information to the first terminal, where the second indication information indicates whether there is data that needs to be sent to the second station of the first multi-link device. For example, the second indication information may be carried in an end of service period (end of service period, EOSP) field of the QoS control field shown in FIG. 7, in the more data field shown in FIG. 8, or in the first PPDU.

S1102: The second multi-link device sends the first PPDU to the first multi-link device by using the first station. The corresponding first multi-link device receives the first PPDU by using the first station.

In this embodiment, because the second station of the first multi-link device is in the doze state, the second multi-link device may send the first PPDU by using the first station in the active mode, to request to wake up the second station.

S1103: The first multi-link device determines, based on the first PPDU, whether to wake up the second station.

For example, the first multi-link device may determine, based on the first PPDU, whether to agree to wake up the second station. If the first multi-link device agrees to wake up the second station, it indicates that it is determined to wake up the second station, the second station is adjusted from the doze state to the awake state, or the power management mode is adjusted to the active mode. If the first multi-link device does not agree to wake up the second station, it indicates that it is determined not to wake up the second station, and the second station maintains in the doze state.

If the second multi-link device sends the first PPDU in the manner 1 in S1101, the first multi-link device may send a fourth PPDU to the second multi-link device in the S 1103, where the fourth PPDU includes a wakeup response (Wakeup Response) frame. The wakeup response frame is used to notify whether the second station is allowed to be woken up. The wakeup response frame may include information about the second station and/or indication information indicating whether the second station is allowed to be woken up.

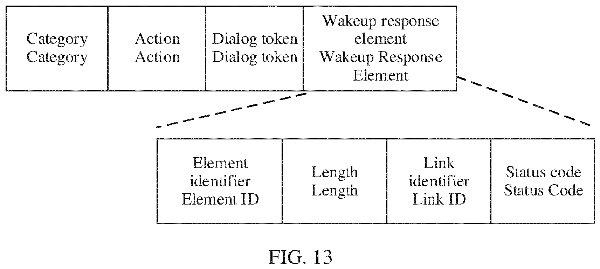

A possible frame structure of the wakeup response frame is shown in FIG. 13, including a category field, an action field, a dialog token field, and a wakeup response element (Wakeup Response Element) field. The wakeup response element field includes an element ID field, a length field, a link ID field, and a status code (Status Code) field. The link ID field indicates identifier information of a link corresponding to the second station. The status code field indicates whether the second station is allowed to be woken up.

If the first multi-link device includes more than two links and stations, when the wakeup request frame is used to request to wake up a plurality of second stations or a plurality of links, the wakeup response frame may carry link IDs of the plurality of links and status code corresponding to each link.

The first multi-link device may indicate a current power management mode and power status of the second station of the first multi-link device through the first link. For example, the first multi-link device sends a third PPDU over the first link, and the third PPDU includes a first beacon frame. The first beacon frame may indicate a power management mode of the second station corresponding to the second link. In this case, the first beacon frame may indicate that the power management mode of the second station is an active mode or a power save mode. Alternatively, the first beacon frame may indicate a power status in the power save mode of the second station. In this case, the first beacon frame may indicate that the power status in the power save mode of the second station is an awake state or a doze state. For example, the first beacon frame includes a power management mode field (for example, PM=1 indicates the power save mode, and PM=0 indicates the active mode) and a power status field. The power management mode field indicates that the power management mode of the second station is the active mode or the power save mode, and the power status field indicates that the power status of the second station is the awake state or the doze state. If the power management mode field is in the power save mode, the power status field is further indicated.

In an implementation, a per-STA profile field in a multi-link element of the first beacon frame carries a power management mode field and a power status field.

In another implementation, a reduced neighbor report (reduced neighbor report, RNR) element field in the first beacon frame carries a power management mode field and a power status field.

When the second station is in the awake state in the power save mode, if idle duration of the second station reaches first duration, the first multi-link device may adjust the power management mode of the second station to the power save mode, and adjust the power status of the second station to the doze state. Setting the first duration can prevent the second multi-link device from frequently waking up the second station over the primary link. A threshold of the first duration is random. For example, the first duration is greater than or equal to duration required for media synchronization recovery (medium sync recovery).

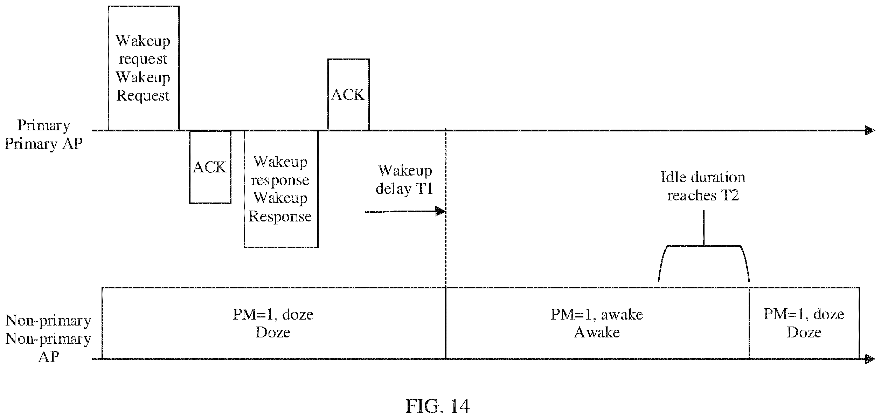

For example, as shown in FIG. 14, the second multi-link device sends a wakeup request to a primary AP of the first multi-link device, the first multi-link device sends an acknowledgement (ACK) message for the wakeup request by using the primary AP, and then sends a wakeup response, and the second multi-link device sends an ACK message for the wakeup response by using a primary AP. The first multi-link device wakes up a non-primary AP, and after a wakeup delay T1 elapses, the non-primary AP is in an awake state. Alternatively, when the primary AP agrees to wake up the non-primary AP, the primary AP replies with a wakeup response frame only after the non-primary AP is woken up. When the primary AP refuses to wake up the non-primary AP, this limitation is not required, and the primary AP may reply with a wakeup response frame immediately. When idle duration of the non-primary AP reaches T2, the non-primary AP of the first multi-link device is in a doze state.

Because power saving of an AP may be optionally supported, a reserved bit may be used in an MLD capabilities field in the multi-link element to indicate whether the AP MLD and the non-AP MLD support the foregoing power saving operation of the AP MLD.

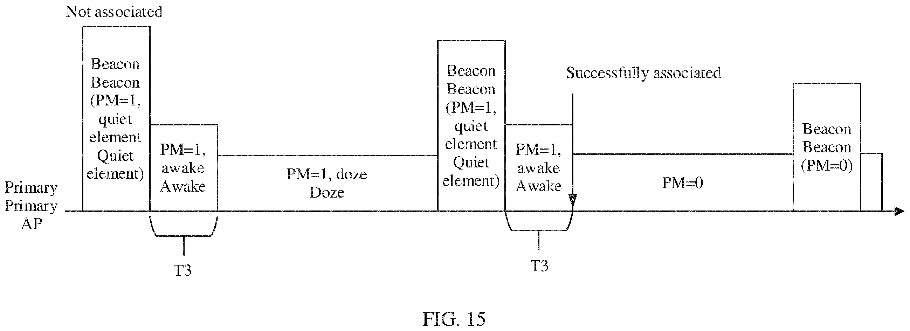

In a possible scenario, the first multi-link device has no associated second multi-link device, and the first station of the first multi-link device may carry a quiet element (Quiet Element) field by using a third beacon frame, for example, as shown in FIG. 9. The quiet element field indicates a period of quiet time and is used to set the power management mode to the power save mode. As shown in FIG. 15, the quiet time starts after T3 duration after the third beacon frame is sent, and lasts until next TBTT. In the quiet period, the first station is in the doze state in the power save mode. In a T3 time period after the first station transmits the third beacon frame, if the first multi-link device receives an association request from the second multi-link device by using the first station and successfully associates with the second multi-link device, the first station immediately switches the power save mode to the active mode. In addition, the first station stops carrying a quiet element in a subsequently sent third beacon frame.

Optionally, when or after quiet time (a quiet interval) over the first link starts, the channel number field in the RNR element may be further set to 0.

In this embodiment of this application, the second station of the first multi-link device is in the doze state in the power save mode, and the second multi-link device may wake up the second station of the first multi-link device by using the first station. In this way, the second station of the first multi-link device can be woken up when the second station needs to be woken up, and is in the doze state when the second station does not need to be woken up. This is more favorable to power saving of the multi-link device.

Currently, the non-AP MLD determines whether the AP MLD is a soft AP MLD only by checking whether a per-STA profile in a multi-link element carried in a probe response frame carries non-STR link pair (NSTR Link Pair) information. The non-AP MLD cannot learn whether the AP MLD is a soft AP MLD through a beacon frame. Based on this, this embodiment of this application provides the following manner to indicate whether the first multi-link device is a soft AP MLD.

The first multi-link device may send a second PPDU. The second PPDU includes a multi-link element.

A first field of the multi-link element may indicate whether the first multi-link device is the soft AP MLD. The first field may be any field in the multi-link element, for example, may be a reserved field or a frequency separation for STR field.

Manner 1: The reserved field of the multi-link element may indicate whether the first multi-link device is the soft AP MLD.

For example, a reserved (Reserved) field in an MLD capability subfield (MLD Capability subfield) in the multi-link element (Multi-link Element) is used for indication.

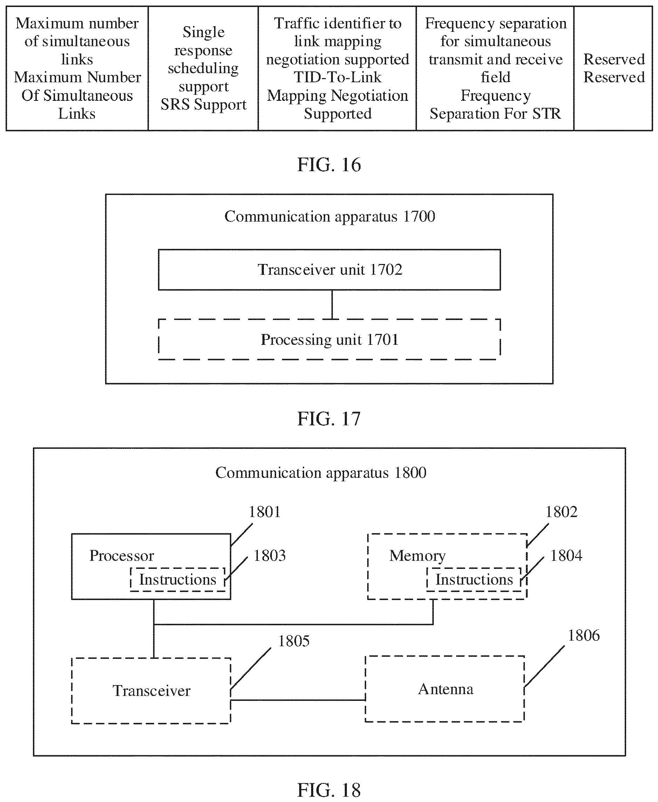

A possible frame structure of the multi-link element may be shown in FIG. 16, including a maximum number of simultaneous links (Maximum Number Of Simultaneous Links) field, a single response scheduling support (Single Response Scheduling Support, SRS Support) field, a traffic identifier to link mapping negotiation supported (TID-To-Link Mapping Negotiation Supported) field, a frequency separation for STR (Frequency Separation For STR) field, and a reserved field. The reserved field is an undefined field that may be used for a plurality of future selections. In this manner, some or all bits in the reserved field may indicate whether the first multi-link device is the soft AP MLD. For example, if one bit in the reserved field is 0, it indicates a non-soft AP MLD, for example, a regular (Regular) AP MLD. If one bit in the reserved field is 1, it indicates a soft AP MLD.

If some bits (for example, a first bit) in the reserved field indicate whether the first multi-link device is a soft AP MLD, remaining bits (for example, remaining bits other than the first bit) in the reserved field may also indicate other information. This is not limited herein.

It may be understood that another frame or element may also include a reserved field, and information indicated by reserved fields in different frames or elements may be the same or different. In this embodiment, only the reserved field of the multi-link element indicates whether the first multi-link device is a soft AP MLD, and information indicated by the reserved field in the another frame or element is not limited.

Manner 2: The frequency separation for STR field of the multi-link element may indicate whether the first multi-link device is the soft AP MLD.

Because the soft AP MLD does not support STR, the frequency separation for STR field may be set to a specific value to indicate that the AP MLD sending the multi-link element is the soft AP MLD. The value is random, and is not limited herein. For example, the frequency separation for STR field is set to 31 to indicate that the AP MLD sending the multi-link element is the soft AP MLD.

Optionally, the multi-link element may be carried in a beacon frame.

In this embodiment, the second multi-link device may learn whether the first multi-link device is the soft AP MLD. This embodiment may be used in combination with the foregoing embodiment. For example, the first multi-link device may send the second PPDU before S1101 to notify the second multi-link device whether the first multi-link device is the soft AP MLD.

Currently, it is specified in the 802.11be draft that a soft AP MLD cannot send a beacon frame over a non-primary link, but information about a non-primary AP corresponding to the non-primary link needs to be carried in the beacon frame. As a result, the related information of the non-primary AP cannot be transmitted to another multi-link device. Based on this, this embodiment of this application provides the following manner to ensure that the related information of the non-primary AP can be transmitted. In this embodiment of this application, an example in which the second station of the first multi-link device is a non-primary AP is used for description.

Manner 1: The first multi-link device broadcasts a sixth PPDU over the second link, where the sixth PPDU includes information about the second station.

In this manner, a new broadcast frame (namely, the sixth PPDU) may be defined on the non-primary link, and the new broadcast frame carries the information about the second station. The new broadcast frame may be periodically broadcast by the first multi-link device.

Manner 2: The first multi-link device sends a seventh PPDU over the first link, where the seventh PPDU includes a second beacon frame, the second beacon frame includes a fourth field, and the fourth field carries information about the second station.

In this manner, the beacon frame may be sent over the primary link, and the beacon field carries the related information of the non-primary AP.

For example, the fourth field may be an element field of the second link. The element field of the second link may be an element field, for example, a per-STA profile subelement of the non-primary link or an RNR element.

For example, a multi-link element in the second beacon frame carries the per-STA profile subelement of the non-primary link, and the per-STA profile subelement of the non-primary link carries the information about the second station.

For another example, a multi-link element in the second beacon frame carries the RNR element, and the RNR element is used as the element field of the second link and carries the information about the second station.

For example, the information about the second station includes one or more of the following: a timestamp (timestamp), a beacon interval (beacon interval), and a timing synchronization function offset (timing synchronization function offset, TSF Offset).

Optionally, the beacon interval may not be explicitly indicated. For example, it may be specified in a protocol that a beacon interval of the non-primary AP is the same as a beacon interval of the primary AP.

If the information about the second station includes the beacon interval, a management frame that carries time information (for example, in a unit of TBTT) may be sent over the non-primary link (namely, the second link). In this way, after receiving the time information over the non-primary link, the second multi-link device can correctly calculate the time information, and especially when the management frame does not carry information about the primary AP (assumed that the primary AP is a reference AP of the non-primary AP, and the beacon intervals of the primary AP and the non-primary AP are the same), the second multi-link device can correctly obtain the time information through calculation.

In this embodiment, the first multi-link device may send the information about the non-primary AP on the primary link or the non-primary link device, to improve accuracy of communication.

It is specified in the 802.11be draft (draft) that a multicast data frame needs to be replicated and sent over all links of an AP MLD, but a multicast management frame is sent independently over a corresponding link of the AP MLD. However, in this manner of sending the multicast data frame and the multicast management frame (the multicast data frame and the multicast management frame are referred to as multicast frames), all the links of the AP MLD need to wake up periodically to receive a multicast frame buffered on an AP side. This is unfavorable to power saving of the AP MLD. Therefore, in this embodiment of this application, the primary link assists the non-primary link to send the multicast management frame. In this way, the non-primary AP corresponding to the non-primary link may always be in the power save mode, and does not need to be adjusted to the active mode, to reduce power consumption of the AP MLD. In this embodiment, the multicast management frame included in the multicast frame is mainly used for description. The method provided in this embodiment may also be used for the multicast data frame included in the multicast frame. Similarities are not described again.

In this embodiment, the first multi-link device sends a fifth PPDU over the first link, where the fifth PPDU includes identifier information of the second link and a multicast management frame corresponding to the second link. The multicast frame includes a multicast data frame and/or a multicast management frame.

Specifically, the multicast data frame may be sent only over the first link (the primary link), and does not need to be sent over the second link (the non-primary link). The multicast management frame may be forwarded by the first link by carrying the identifier information of the second link, and the multicast management frame may not be sent over the second link.

In an implementation, the fifth PPDU includes an address 3 field, and the address 3 field carries the identifier information of the second link. Optionally, if the multicast management frame is for the second multi-link device itself instead of a link or a station, the address 3 field may be set to an MLD MAC address of the second multi-link device itself, or may be set to a BSSID corresponding to the second link in the second multi-link device.

When the multicast management frame of the second link is sent over the first link, the multicast management frame needs to be encrypted by using a PN allocated by the first link.

It should be noted that this embodiment requires that there is no association of a legacy STA over the second link.

In another implementation, the fifth PPDU includes a frame body, and the frame body carries the identifier information of the second link.

The address 3 field and the frame body may be carried in the frame structure shown in FIG. 7.

In a possible case, the first multi-link device sends a ninth PPDU to the second multi-link device over the first link, where the ninth PPDU indicates that the second station of the first multi-link device is unavailable. For example, the ninth PPDU may include third indication information. The third indication information indicates that the second station of the first multi-link device is unavailable. The unavailability may be specifically that an association procedure is not allowed to be initiated on a channel on which the second station of the first multi-link device works, may be that the second station of the first multi-link device is about to perform channel switching, and frame switching over the second link is prohibited during this period, or may be that the second station of the first multi-link device schedules a quiet period or restricted TWT, and a legacy STA is prohibited from performing transmission during this period.

That the second multi-link device is not allowed to initiate the association procedure on the channel on which the second station of the first multi-link device works may be that the second multi-link device is not allowed to send a beacon frame, reply with a probe response frame, and reply with an association response frame on the channel on which the second station of the first multi-link device works.

In an implementation, the ninth PPDU may include a channel switch mode field (Channel Switch Mode field). The channel switch mode field indicates a switch mode of the channel on which the second station of the first multi-link device works. When the channel switch mode field is set to 1, it indicates that before the channel switching is completed, initiating transmission on the channel on which the second station of the first multi-link device works is prohibited, and further, a channel number is set to 0, to indicate that the second station of the first multi-link device is unavailable.

For example, it is assumed that the AP MLD has three affiliated APs: an affiliated AP 1 (corresponding to a link 1) working on 2.4 GHz, an affiliated AP 2 (corresponding to a link 2) working on 5 GHz, and an affiliated AP 3 (corresponding to a link 3) working on 6 GHz. When traffic load is low, it may be set that the affiliated AP 1 and the affiliated AP 3 do not allow the second multi-link device to directly initiate association with the affiliated AP 1 and the affiliated AP 3 on channels on which the affiliated AP 1 and the affiliated AP 3 work. Specifically, the corresponding affiliated AP 1 and affiliated AP 3 are prohibited from sending a beacon frame, replying with a probe response frame, and replying with an association response frame on the channels on which the corresponding affiliated AP 1 and affiliated AP 3 are located. The second multi-link device is allowed to initiate an association only on a channel on which the affiliated AP 2 is located. A non-AP MLD can initiate a multi-link association request only over the link 2, to establish a plurality of links, and the link 2 needs to be accepted by the AP MLD. In this way, when load of the AP MLD is low, the affiliated AP 1 and the affiliated AP 3 may be set to a power save mode, and the affiliated AP 1 and the affiliated AP 3 are woken up for transmission only as required by the non-AP MLD. This can further reduce power consumption of the first multi-link device. In addition, the link 1 and the link 3 are not interfered by transmission of the legacy STA. This facilitates transmission of low-latency traffic.

Currently, it is specified in the 802. 11be draft that an affiliated AP needs to use an RNR element in a beacon frame to report related information of another affiliated AP that belongs to a same AP MLD as the affiliated AP. Corresponding to the foregoing example, that is, the affiliated AP 2 needs to indicate related information of the affiliated AP 1 and the affiliated AP 3 in a beacon frame of the link 2 by using an RNR element. For APs such as the affiliated AP 1 and the affiliated AP 3 that are not allowed to be associated with a pre-extremely high throughput (extremely high throughput, EHT) STA and a single-link (single-link) EHT STA, a new indication may be added to an RNR element, to prevent a client from switching to channels on which the affiliated AP 1 and the affiliated AP 3 are located to initiate an association.

That the second multi-link device is not allowed to initiate the association procedure on the channel on which the second station of the first multi-link device works may indicate that the second station of the first multi-link device is unavailable or unavailable (unavailable), or the second multi-link device is not allowed to switch to a channel on which a corresponding reported AP works to directly initiate probe and association operations. A reason why the second station of the first multi-link device is unavailable or unavailable may be that the station of the first multi-link device is ready to perform channel switching, or the second station of the first multi-link device schedules a quiet period or restricted TWT.

For example, the third indication information may be carried in an RNR element, and the RNR element is carried in the ninth PPDU.

The first multi-link device may send the third indication information to the second multi-link device in one or more of the following manners.

Manner 1: A channel number field in the RNR element is set to a reserved value. The reserved value is any value, for example, 0 or 255. When the legacy STA reads that the channel number field is 0 or 255, because the legacy STA cannot read the field, the legacy STA cannot obtain corresponding channel information, and therefore does not attempt to switch to a corresponding channel to send a probe request and an association request. When the EHT STA and the non-AP MLD read that the channel number field is 0 or 255, the EHT STA and the non-AP MLD do not attempt to switch to a corresponding channel to send a probe request and an association request.

Manner 2: Set a TBTT info field type field to a reserved value. The reserved value may be any value, for example, 1. When the legacy STA reads that the TBTT info field type field is 1, because the legacy STA cannot read the field, the legacy STA may not attempt to switch to a corresponding channel to send a probe request and an association request. When the EHT STA and the non-AP MLD read that the TBTT info field type field is 1, the EHT STA and the non-AP MLD do not attempt to switch to a corresponding channel to send a probe request and an association request. For another example, the TBTT info field type field is set to 1 and a TBTT info field length field is set to 3. Because the legacy STA cannot read the information, the legacy STA may not attempt to switch to a corresponding channel to send a probe request and an association request. For the EHT STA and the non-AP MLD, when the first multi-link device is a soft AP MLD, and the corresponding TBTT info field type field is set to 1 and the TBTT info field length field is set to 3, the link is a non-primary link. The second multi-link device is not allowed to directly initiate probe and association operations by switching to a channel on which the corresponding reported AP works.

Manner 3: One reserved bit in an MLD parameter field is used for indication. A value of the reserved bit is random, for example, 1. When the reserved bit is set to 1, it indicates that the EHT STA or non-AP MLD is not allowed to send a probe request and an association request on a corresponding channel. When the EHT STA and the non-AP MLD read that the reserved bit is 1, the EHT STA and the non-AP MLD do not attempt to switch to a corresponding channel to send a probe request and an association request.

Manner 4: The manner 1 and the manner 2 are combined, or the manner 2 and the manner 3 are combined. For example, the channel number field in the manner 1 or the TBTT info field type field in the manner 2 is set as a reserved value for notifying the legacy STA, and the reserved bit in the manner 3 is used for notifying the EHT STA and the non-AP MLD.

The foregoing embodiments may be used alone, or may be used in combination.

It may be understood that, in the foregoing embodiments, the method and/or steps implemented by the first multi-link device may also be implemented by a component (for example, a chip or a circuit) that can be used for the first multi-link device, and the method and/or steps implemented by the second multi-link device may also be implemented by a component that can be used for the second multi-link device.

In the foregoing embodiments provided in this application, the method provided in embodiments of this application is separately described from a perspective of interaction between the first multi-link device and the second multi-link device. To implement functions in the method provided in embodiments of this application, the first multi-link device and the second multi-link device may include a hardware structure and/or a software module, and implement the foregoing functions in a form of a hardware structure, a software module, or a combination of the hardware structure and the software module. Whether a function in the foregoing functions is implemented by the hardware structure, the software module, or the combination of the hardware structure and the software module depends on particular applications and design constraints of the technical solutions.

The following describes, with reference to the accompanying drawings, communication apparatuses configured to implement the foregoing method in embodiments of this application. Therefore, all the foregoing content may be used in the following embodiments. Repeated content is not described again.

FIG. 17 is a possible representation form of a communication apparatus according to an embodiment of this application. The communication apparatus 1700 may be configured to implement functions or steps implemented by the first multi-link device or the second multi-link device in the foregoing method embodiment. The communication apparatus may optionally include a processing unit 1701 and a transceiver unit 1702. Optionally, the apparatus may further include a storage unit. The storage unit may be configured to store instructions (code or a program) and/or data. The processing unit 1701 and the transceiver unit 1702 may be coupled to the storage unit. For example, the processing unit 1701 may read the instructions (the code or the program) and/or the data in the storage unit, to implement a corresponding method. The foregoing units may be independently disposed, or may be partially or completely integrated.

In some possible implementations, the communication apparatus 1700 can correspondingly implement behavior and a function of the first multi-link device in the foregoing method embodiment. For example, the communication apparatus 1700 may be an AP MLD, or may be a component (for example, a chip or a circuit) used in an AP MLD. The transceiver unit 1702 may be configured to perform all receiving or sending operations performed by the first multi-link device in the foregoing embodiment, for example, S1102 in the embodiment shown in FIG. 11, and/or another process used to support the technology described in this specification. The processing unit 1701 is configured to perform all operations performed by the first multi-link device in the foregoing embodiment other than the receiving and sending operations, for example, determine, based on the first PPDU, whether to wake up the second station in S1103 of the embodiment shown in FIG. 11, and/or another process used to support the technology described in this specification.

For example, the transceiver unit 1702 is configured to receive a first PPDU from the second multi-link device by using a first station, where the first PPDU is used to wake up a second station of the communication apparatus, the communication apparatus includes the first station and the second station, and the second station is in a doze state in a power save mode.

The processing unit 1701 is configured to determine, based on the first PPDU, whether to wake up the second station.

In an optional manner, the transceiver unit 1702 is further configured to send a second PPDU, where the second PPDU includes a multi-link element.

A first field of the multi-link element indicates whether the communication apparatus is a soft access point multi-link device soft AP MLD.

The first field may be a reserved field or a frequency separation for STR field.

In an optional manner, the first PPDU includes a wakeup request frame, the wakeup request frame is used to wake up the second station, and the wakeup request frame includes one or more of the following types of information: an access type corresponding to buffered data, a traffic identifier corresponding to the buffered data, a size of the buffered data, an identifier of the second station, or a minimum remaining delay of latency sensitive traffic;
the first PPDU includes notification information, and the notification information is used to wake up the second station; or
the first PPDU includes a probe request frame, the probe request frame carries a wakeup request element, and the wakeup request element is used to request to wake up the second station.

In an optional manner, the first station is a station corresponding to a first link, and the second station is a station corresponding to a second link.

In an optional manner, the transceiver unit 1702 is further configured to send a third PPDU to the second station over the first link, where the third PPDU includes a first beacon frame, the first beacon frame indicates a power status, in the power save mode, of the second station corresponding to the second link, and the power status includes an awake state or a doze state.

In an optional manner, the first beacon frame includes a second field and a third field, the second field indicates that a power management mode of the second station is the power save mode, and the third field indicates the power status of the second station.

For example, the second field may be a power management mode field, and the third field may be a power status field.

In an optional manner, the processing unit 1701 is specifically configured to send a fourth PPDU to the second multi-link device by using the transceiver unit, where the fourth PPDU includes a wakeup response frame, and the wakeup response frame notifies whether the second station is allowed to be woken up.

In an optional manner, the wakeup response frame includes an identifier of the second station and indication information indicating whether the second station is allowed to be woken up.

In an optional manner, the transceiver unit 1702 is further configured to: broadcast a sixth PPDU over the second link, where the sixth PPDU includes information about the second station; or send a seventh PPDU over the first link, where the seventh PPDU includes a second beacon frame, the second beacon frame includes a fourth field, and the fourth field carries information about the second station.

The fourth field may be an element field of the second link.

The information about the second station includes one or more of the following: a timestamp, a beacon interval, and a timing synchronization function offset.

In some possible implementations, the communication apparatus 1700 can correspondingly implement behavior and a function of the second multi-link device in the foregoing method embodiment. For example, the communication apparatus 1700 may be a STA MLD, or may be a component (for example, a chip or a circuit) used in a STA MLD. The transceiver unit 1702 may be configured to perform all receiving or sending operations performed by the second multi-link device in the foregoing embodiment, for example, S1102 in the embodiment shown in FIG. 11, and/or another process used to support the technology described in this specification. The processing unit 1701 is configured to perform all operations performed by the second communication apparatus in the foregoing embodiment other than the receiving and sending operations, for example, generate a first PPDU in S 1101 in the embodiment shown in FIG. 11, and/or another process used to support the technology described in this specification.

For example, the processing unit 1701 is configured to determine a first physical layer protocol data unit PPDU, where the first PPDU is used to wake up a second station of the first multi-link device, and the second station is in a doze state in a power save mode.

The transceiver unit 1702 is configured to send the first PPDU to the first multi-link device by using a first station.

In an optional manner, the transceiver unit 1702 is further configured to receive a second PPDU, where the second PPDU includes a multi-link element.

A first field of the multi-link element indicates whether the first multi-link device is a soft access point multi-link device soft AP MLD.

In an optional manner, the first PPDU includes a wakeup request frame, the wakeup request frame is used to wake up the second station, and the wakeup request frame includes one or more of the following types of information: an access type corresponding to buffered data, a traffic identifier corresponding to the buffered data, a size of the buffered data, an identifier of the second station, or a minimum remaining delay of latency sensitive traffic;
the first PPDU includes notification information, and the notification information is used to wake up the second station; or
the first PPDU includes a probe request frame, the probe request frame carries a wakeup request element, and the wakeup request element is used to request to wake up the second station.

In an optional manner, the transceiver unit 1702 is further configured to receive a fourth PPDU from the first multi-link device, where the fourth PPDU includes a wakeup response frame, and the wakeup response frame notifies whether the second station is allowed to be woken up.

In an optional manner, the wakeup response frame includes an identifier of the second station and indication information indicating whether the second station is allowed to be woken up.

In an optional manner, the first station is a station corresponding to a first link, and the second station is a station corresponding to a second link.

In an optional manner, the transceiver unit 1702 is further configured to: receive a sixth PPDU over the second link, where the sixth PPDU includes information about the second station; or receive a seventh PPDU over the first link, where the seventh PPDU includes a second beacon frame, the second beacon frame includes a fourth field, and the fourth field carries information about the second station.

The information about the second station includes one or more of the following: a timestamp, a beacon interval, and a timing synchronization function offset.

It should be noted that the communication apparatus 1700 may be configured to perform the foregoing method embodiment. For specific steps, descriptions, and corresponding beneficial effects, refer to the foregoing method embodiment. Details are not described herein again.

It should be understood that the processing unit 1701 in this embodiment of this application may be implemented by a processor/processing circuit or a circuit component related to a processor/processing circuit, and the transceiver unit 1702 may be implemented by a transceiver/transceiver interface or a circuit component related to a transceiver/transceiver interface or a communication interface.

FIG. 18 is a possible representation form of a communication apparatus according to an embodiment of this application. The communication apparatus 1800 may include a processor 1801, a transceiver 1805, and optionally, further includes a memory 1802. The communication apparatus may be used as an apparatus for generating and sending a PPDU in this application, or may be used as an apparatus for receiving a PPDU in this application.

The transceiver 1805 may be referred to as a transceiver unit, a transceiver, a transceiver circuit, or the like, and is configured to implement a transceiver function. The transceiver 1805 may include a receiver and a transmitter. The receiver may be referred to as a receiver, a receiver circuit, or the like, and is configured to implement a receiving function. The transmitter may be referred to as a transmitter, a transmitter circuit, or the like, and is configured to implement a sending function.

The memory 1802 may store a computer program or software code or instructions 1804, and the computer program or software code or instructions 1804 may also be referred to as firmware. The processor 1801 may control a MAC layer and a PHY layer by running a computer program or software code or instructions 1803 in the processor 1801, or by invoking the computer program or software code or instructions 1804 stored in the memory 1802, to implement a PPDU transmission method provided in the following embodiments of this application. The processor 1801 may be a central processing unit (central processing unit, CPU), and the memory 1802 may be, for example, a read-only memory (read-only memory, ROM) or a random access memory (random access memory, RAM).

The processor 1801 and the transceiver 1805 described in this application may be implemented in an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like.

The communication apparatus 1800 may further include an antenna 1806. Modules/units included in the communication apparatus 1800 are merely examples for description. This is not limited in this application.

As described above, the communication apparatus 1800 described in the foregoing embodiment may be an AP MLD or a STA MLD. However, a scope of the communication apparatus described in this application is not limited thereto, and a structure of the communication apparatus may not be limited to that in FIG. 18. The AP MLD includes one or more APs, and the STA MLD includes one or more STAs.

The AP may be multi-antenna/multi-radio frequency, or may be single-antenna/single-radio frequency. The antenna/radio frequency is configured to send/receive a data packet. In an implementation, an antenna or a radio frequency part of the AP may be separated from a main body of the AP, that is, the AP is in a structure of a remote layout. In an implementation, the STA may be single-antenna/single-radio frequency or may be multi-antenna/multi-radio frequency, and may be a device having more than two antennas. The antenna/radio frequency is configured to send/receive a data packet. In an implementation, an antenna or a radio frequency part of the STA may be separated from a main body of the STA, that is, the STA is in a structure of a remote layout.

Alternatively, the communication apparatus in this application may be an independent device or may be a part of a large device. For example, the communication apparatus may be implemented in the following form:
(1) an independent integrated circuit IC, a chip, a chip system, or a subsystem; (2) a set including one or more ICs, where, optionally, the IC set may include a storage component for storing data and instructions; (3) a module that can be embedded in another device; (4) a receiver, an intelligent terminal, a wireless device, a handheld device, a mobile unit, a vehicle-mounted device, a cloud device, an artificial intelligence device, or the like; and (5) others.

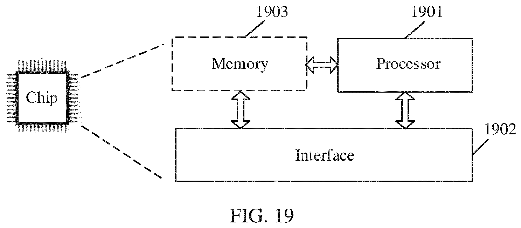

For the communication apparatus implemented in the form of the chip or the chip system, refer to a schematic diagram of a structure of a chip shown in FIG. 19. The chip shown in FIG. 19 includes a processor 1901 and an interface 1902. There may be one or more processors 1901. There may be a plurality of interfaces 1902. The interface 1902 is configured to receive and send a signal. Optionally, the chip or the chip system may include a memory 1903. The memory 1903 is configured to store program instructions and data that are necessary for the chip or the chip system.

Embodiments of this application do not limit the protection scope and applicability of the claims. A person skilled in the art may adaptively change functions and deployments of elements in this application, or omit, replace, or add various processes or components as appropriate without departing from the scope of embodiments of this application.

An embodiment of this application further provides a computer-readable storage medium. The computer-readable storage medium stores a computer program. When the computer-readable storage medium is executed by a computer, functions of the foregoing method embodiment are implemented.

An embodiment of this application further provides a computer program product. When the computer program product is executed by a computer, functions of the foregoing method embodiment are implemented.

An embodiment of this application further provides a chip system. The chip system includes a processor and an interface, configured to support a communication transmission device in implementing a function of an access point or a station in the foregoing method embodiment, for example, determining or processing at least one of data and information in the foregoing method. In a possible design, the chip system further includes a memory, and the memory is configured to store necessary information and data of the foregoing communication apparatus. The chip system may include a chip, or may include a chip and another discrete device.

An embodiment of this application provides a functional entity. The functional entity is configured to implement the foregoing communication method.

An embodiment of this application provides a communication system. The communication system includes a first multi-link device and a second multi-link device that implement the foregoing communication method.

It should be understood that sequence numbers of the foregoing processes do not mean execution sequences in various embodiments of this application. The execution sequences of the processes should be determined based on functions and internal logic of the processes, but should not be construed as any limitation on implementation processes in embodiments of this application.

A person of ordinary skill in the art may be aware that units and algorithm steps in the examples described with reference to embodiments disclosed in this specification may be implemented by electronic hardware or a combination of computer software and electronic hardware. Whether these functions are implemented by hardware or software depends on particular applications and design constraints of technical implementations. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiment. Details are not described herein again.

In the several embodiments provided in this application, it should be understood that the disclosed system, apparatus, and method may be implemented in other manners. For example, the foregoing described apparatus embodiments are merely examples. For example, division into the units is merely a logical function division and may be another division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units. To be specific, the components may be located at one location, or may be distributed on a plurality of network units. Some or all of the units may be selected based on actual requirements to achieve the objectives of implementations of embodiments.

In addition, functional units in embodiments of this application may be integrated into one processing unit, each of the units may exist alone physically, or two or more units may be integrated into one unit.

When functions are implemented in a form of a software functional unit and sold or used as an independent product, the functions may be stored in a computer-readable storage medium. Based on this understanding, the technical implementations of this application essentially, or a part contributing to the conventional technology, or some of the technical implementations may be implemented in a form of a software product. The computer software product is stored in a storage medium, and includes a plurality of instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The steps of the methods in embodiments of this application may be adjusted in sequence, combined, or deleted based on an actual requirement.

The modules/units of the apparatus in embodiments of this application may be combined, divided, and deleted based on an actual requirement.

The foregoing embodiments are merely intended to describe the technical implementations of this application, but are not intended to limit this application. Although this application is described in detail with reference to the foregoing embodiments, a person of ordinary skill in the art should understand that the technical implementations described in the foregoing embodiments may still be modified or some technical features thereof may be equivalently replaced. These modifications or replacements do not enable essence of a corresponding technical implementation to depart from the scope of the technical implementations of embodiments of this application.

## Claims

1. A communication method, comprising:
receiving, by a first multi-link device, a first physical layer protocol data unit PPDU from a second multi-link device by using a first station, wherein the first PPDU is used to wake up a second station of the first multi-link device, the first multi-link device comprises the first station and the second station, and the second station is in a doze state in a power save mode; and
determining, by the first multi-link device based on the first PPDU, whether to wake up the second station.

2. The method according to claim 1, wherein the method further comprises:
sending, by the first multi-link device, a second PPDU, wherein the second PPDU comprises a multi-link element; and
a first field of the multi-link element indicates whether the first multi-link device is a soft access point multi-link device soft AP MLD.

3. The method according to claim 1 or 2, wherein the first station of the first multi-link device corresponds to a first station of the second multi-link device, and the first PPDU comes from the first station of the second multi-link device; and
the second station of the first multi-link device corresponds to a second station of the second multi-link device.

4. The method according to any one of claims 1 to 3, wherein
the first PPDU comprises a wakeup request frame, the wakeup request frame is used to wake up the second station, and the wakeup request frame comprises one or more of the following types of information: an access type corresponding to buffered data, a traffic identifier corresponding to the buffered data, a size of the buffered data, an identifier of the second station, or a minimum remaining delay of latency sensitive traffic;
the first PPDU comprises notification information, and the notification information is used to wake up the second station; or
the first PPDU comprises a probe request frame, the probe request frame carries a wakeup request element, and the wakeup request element is used to request to wake up the second station.

5. The method according to any one of claims 1 to 4, wherein the first station is a station corresponding to a first link, and the second station is a station corresponding to a second link.

6. The method according to claim 5, wherein the method further comprises:
sending, by the first multi-link device, a third PPDU to the second station over the first link, wherein the third PPDU comprises a first beacon frame, the first beacon frame indicates a power status, in the power save mode, of the second station corresponding to the second link, and the power status comprises an awake state or a doze state.

7. The method according to claim 6, wherein the first beacon frame comprises a second field and a third field, the second field indicates that a power management mode of the second station is the power save mode, and the third field indicates the power status of the second station.

8. The method according to claim 4, wherein the determining, by the first multi-link device based on the first PPDU, whether to wake up the second station specifically comprises:
sending, by the first multi-link device, a fourth PPDU to the second multi-link device, wherein the fourth PPDU comprises a wakeup response frame, and the wakeup response frame notifies whether the second station is allowed to be woken up.

9. The method according to claim 8, wherein the wakeup response frame comprises an identifier of the second station and indication information indicating whether the second station is allowed to be woken up.

10. The method according to any one of claims 5 to 9, wherein the method further comprises:
sending, by the first multi-link device, a fifth PPDU over the first link, wherein the fifth PPDU comprises identifier information of the second link and a multicast frame corresponding to the second link.

11. The method according to any one of claims 5 to 10, wherein the method further comprises:
broadcasting, by the first multi-link device, a sixth PPDU over the second link, wherein the sixth PPDU comprises information about the second station; or
sending, by the first multi-link device, a seventh PPDU over the first link, wherein the seventh PPDU comprises a second beacon frame, the second beacon frame comprises a fourth field, and the fourth field carries information about the second station; and
the information about the second station comprises one or more of the following: a timestamp, a beacon interval, and a timing synchronization function offset.

12. A communication method, comprising:
determining, by a second multi-link device, a first physical layer protocol data unit PPDU, wherein the first PPDU is used to wake up a second station of a first multi-link device, and the second station is in a doze state in a power save mode; and
sending, by the second multi-link device, the first PPDU to the first multi-link device by using a first station.

13. The method according to claim 12, wherein the method further comprises:
receiving, by the second multi-link device, a second PPDU, wherein the second PPDU comprises a multi-link element; and
a first field of the multi-link element indicates whether the first multi-link device is a soft access point multi-link device soft AP MLD.

14. The method according to claim 12 or 13, wherein a first station of the first multi-link device corresponds to the first station of the second multi-link device; and
the second station of the first multi-link device corresponds to a second station of the second multi-link device.

15. The method according to any one of claims 12 to 14, wherein
the first PPDU comprises a wakeup request frame, the wakeup request frame is used to wake up the second station, and the wakeup request frame comprises one or more of the following types of information: an access type corresponding to buffered data, a traffic identifier corresponding to the buffered data, a size of the buffered data, an identifier of the second station, or a minimum remaining delay of latency sensitive traffic;
the first PPDU comprises notification information, and the notification information is used to wake up the second station; or
the first PPDU comprises a probe request frame, the probe request frame carries a wakeup request element, and the wakeup request element is used to request to wake up the second station.

16. The method according to any one of claims 12 to 15, wherein the method further comprises:
receiving, by the second multi-link device, a fourth PPDU from the first multi-link device, wherein the fourth PPDU comprises a wakeup response frame, and the wakeup response frame notifies whether the second station is allowed to be woken up.

17. The method according to claim 16, wherein the wakeup response frame comprises an identifier of the second station and indication information indicating whether the second station is allowed to be woken up.

18. The method according to any one of claims 12 to 17, wherein the first station is a station corresponding to a first link, and the second station is a station corresponding to a second link.

19. The method according to claim 18, wherein the method further comprises:
receiving, by the second multi-link device, a fifth PPDU over the first link, wherein the fifth PPDU comprises identifier information of the second link and a multicast frame corresponding to the second link.

20. The method according to claim 18 or 19, wherein the method further comprises:
receiving, by the second multi-link device, a sixth PPDU over the second link, wherein the sixth PPDU comprises information about the second station; or
receiving, by the second multi-link device, a seventh PPDU over the first link, wherein the seventh PPDU comprises a second beacon frame, the second beacon frame comprises a fourth field, and the fourth field carries information about the second station; and
the information about the second station comprises one or more of the following: a timestamp, a beacon interval, and a timing synchronization function offset.

21. A communication apparatus, comprising:
a transceiver unit, configured to receive a first physical layer protocol data unit PPDU from a second multi-link device by using a first station, wherein the first PPDU is used to wake up a second station of the communication apparatus, the communication apparatus comprises the first station and the second station, and the second station is in a doze state in a power save mode; and
a processing unit, configured to determine, based on the first PPDU, whether to wake up the second station.

22. The apparatus according to claim 21, wherein the transceiver unit is further configured to send a second PPDU, wherein the second PPDU comprises a multi-link element; and
a first field of the multi-link element indicates whether the communication apparatus is a soft access point multi-link device soft AP MLD.

23. The apparatus according to claim 21 or 22, wherein
the first PPDU comprises a wakeup request frame, the wakeup request frame is used to wake up the second station, and the wakeup request frame comprises one or more of the following types of information: an access type corresponding to buffered data, a traffic identifier corresponding to the buffered data, a size of the buffered data, an identifier of the second station, or a minimum remaining delay of latency sensitive traffic;
the first PPDU comprises notification information, and the notification information is used to wake up the second station; or
the first PPDU comprises a probe request frame, the probe request frame carries a wakeup request element, and the wakeup request element is used to request to wake up the second station.

24. The apparatus according to any one of claims 21 to 23, wherein the first station is a station corresponding to a first link, and the second station is a station corresponding to a second link.

25. The apparatus according to claim 24, wherein the transceiver unit is further configured to send a third PPDU to the second station over the first link, wherein the third PPDU comprises a first beacon frame, the first beacon frame indicates a power status, in the power save mode, of the second station corresponding to the second link, and the power status comprises an awake state or a doze state.

26. The apparatus according to claim 25, wherein the first beacon frame comprises a second field and a third field, the second field indicates that a power management mode of the second station is the power save mode, and the third field indicates the power status of the second station.

27. The apparatus according to claim 23, wherein the processing unit is specifically configured to send a fourth PPDU to the second multi-link device by using the transceiver unit, wherein the fourth PPDU comprises a wakeup response frame, and the wakeup response frame notifies whether the second station is allowed to be woken up.

28. The apparatus according to claim 27, wherein the wakeup response frame comprises an identifier of the second station and indication information indicating whether the second station is allowed to be woken up.

29. The apparatus according to any one of claims 24 to 28, wherein the transceiver unit is further configured to: broadcast a sixth PPDU over the second link, wherein the sixth PPDU comprises information about the second station; or send a seventh PPDU over the first link, wherein the seventh PPDU comprises a second beacon frame, the second beacon frame comprises a fourth field, and the fourth field carries information about the second station; and
the information about the second station comprises one or more of the following: a timestamp, a beacon interval, and a timing synchronization function offset.

30. A communication apparatus, comprising:
a processing unit, configured to determine a first physical layer protocol data unit PPDU, wherein the first PPDU is used to wake up a second station of a first multi-link device, and the second station is in a doze state in a power save mode; and
a transceiver unit, configured to send the first PPDU to the first multi-link device by using a first station.

31. The apparatus according to claim 30, wherein the transceiver unit is further configured to receive a second PPDU, wherein the second PPDU comprises a multi-link element; and
a first field of the multi-link element indicates whether the first multi-link device is a soft access point multi-link device soft AP MLD.

32. The apparatus according to claim 30 or 31, wherein
the first PPDU comprises a wakeup request frame, the wakeup request frame is used to wake up the second station, and the wakeup request frame comprises one or more of the following types of information: an access type corresponding to buffered data, a traffic identifier corresponding to the buffered data, a size of the buffered data, an identifier of the second station, or a minimum remaining delay of latency sensitive traffic;
the first PPDU comprises notification information, and the notification information is used to wake up the second station; or
the first PPDU comprises a probe request frame, the probe request frame carries a wakeup request element, and the wakeup request element is used to request to wake up the second station.

33. The apparatus according to any one of claims 30 to 32, wherein the transceiver unit is further configured to receive a fourth PPDU from the first multi-link device, wherein the fourth PPDU comprises a wakeup response frame, and the wakeup response frame notifies whether the second station is allowed to be woken up.

34. The apparatus according to claim 33, wherein the wakeup response frame comprises an identifier of the second station and indication information indicating whether the second station is allowed to be woken up.

35. The apparatus according to any one of claims 30 to 34, wherein the first station is a station corresponding to a first link, and the second station is a station corresponding to a second link.

36. The apparatus according to claim 35, wherein the transceiver unit is further configured to: receive a sixth PPDU over the second link, wherein the sixth PPDU comprises information about the second station; or receive a seventh PPDU over the first link, wherein the seventh PPDU comprises a second beacon frame, the second beacon frame comprises a fourth field, and the fourth field carries information about the second station; and
the information about the second station comprises one or more of the following: a timestamp, a beacon interval, and a timing synchronization function offset.

37. A communication apparatus, comprising a processor and a memory, wherein the processor is coupled to the memory;
the memory stores a computer program; and
the processor is configured to execute the computer program stored in the memory, to enable the apparatus to perform the method according to any one of claims 1 to 20.

38. A computer-readable storage medium, comprising a computer program, wherein when the computer program is run on a computer, the method according to any one of claims 1 to 20 is performed.
